(19) Europäisches Patentamt / European Patent Office / Office européen des brevets

(11) **EP 4 035 981 B1**

(12) **EUROPEAN PATENT SPECIFICATION**

(45) Date of publication and mention
of the grant of the patent:
**18.12.2024 Bulletin 2024/51**

(21) Application number: **20879732.4**

(22) Date of filing: **23.10.2020**

(51) International Patent Classification (IPC):
**B62J 50/22** (2020.01)   **B62J 45/415** (2020.01)
**B62K 21/00** (2006.01)   **B60W 30/045** (2012.01)
**B60W 30/18** (2012.01)   **B60W 40/09** (2012.01)
**B60W 40/114** (2012.01)   **B60W 50/14** (2020.01)
**B62H 7/00** (2006.01)

(52) Cooperative Patent Classification (CPC):
**B62J 45/4151; B60W 30/045; B60W 30/18145;**
**B60W 40/09; B60W 40/114; B60W 50/14;**
**B62J 50/22; B62K 21/00;** B60W 2300/36;
B62H 7/00

(86) International application number:
**PCT/JP2020/039949**

(87) International publication number:
**WO 2021/079997 (29.04.2021 Gazette 2021/17)**

(54) **LEANING-VEHICLE-DATA-OUTPUT APPARATUS**

GERÄT ZUR AUSGABE VON DATEN ÜBER EIN NEIGUNGSFAHRZEUG

APPAREIL DE SORTIE DE DONNÉES DE VÉHICULE INCLINABLE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **25.10.2019 PCT/JP2019/041922**

(43) Date of publication of application:
**03.08.2022 Bulletin 2022/31**

(73) Proprietor: **Yamaha Hatsudoki Kabushiki Kaisha**
**Iwata-shi, Shizuoka 438-8501 (JP)**

(72) Inventor: **MORISHIMA, Keisuke**
**Iwata-shi, Shizuoka 438-8501 (JP)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(56) References cited:
**EP-A1- 2 517 952**   **EP-A1- 3 219 567**
**WO-A1-2017/086403**   **DE-A1- 102005 059 216**
**JP-A- 2013 166 555**   **JP-A- 2016 035 473**
**JP-A- 2017 206 169**   **JP-A- 2018 154 273**
**JP-A- 2018 194 462**   **US-A1- 2017 158 271**

**Description**

TECHNICAL FIELD

The present teaching relates to a leaning-vehicle-data-output apparatus.

BACKGROUND ART

There has been proposed an apparatus for use in enhancing a driving skill of a leaning vehicle. As such an apparatus, Patent Document 1 discloses a voice-information-providing apparatus for presenting an evaluation result of a driving skill to a rider by voice during traveling of a leaning vehicle.

The voice-information-providing apparatus presents an evaluation result to a rider by voice during traveling of the leaning vehicle to thereby promote enhancement of the driving skill of the rider. The voice-information-providing apparatus presents an evaluation result of a driving skill acquired by processing traveling data of the leaning vehicle during traveling to the rider by voice in a case where the leaning vehicle is traveling and is not turning.

In the voice-information-providing apparatus, a turn determiner detects a turning motion section by using a detection value of a yaw rate input from a gyroscope. The turn determiner detects the entire corner as the turning motion section.

Patent Document 2 discloses a driving assist method allowing sharing of curve information, obtained through actual traveling of a vehicle, with a driver of another vehicle.

In the driving assist method of Patent Document 2, positional information of an own vehicle is stored and a curve on which the vehicle has traveled is detected based on the stored positional information. In the driving assist method of Patent Document 2, with respect to the detected curve, curve information including at least a curve curvature is transmitted so that driving of another vehicle on a curve is assisted.

In the driving assist method of Patent Document 2, traveling information data such as a roll angle and a vehicle speed acquired during traveling on a curve is processed after a vehicle has traveled on the curve, and curve information including at least a curve curvature is acquired. The acquired curve information is transmitted to another vehicle.

EP 3 219 567 A1, which discloses a leaning-vehicle-data-output apparatus according to the preamble of claim 1, teaches a system for analyzing a rider performance, in which physical motion parameters of the vehicle in motion are sensed and the measured data is supplied to a computing unit. In the computing unit, segments in a time series of measured data are determined by processing the measured data in the computing unit. Each segment corresponds to a rider control behavior and the plurality of such consecutive rider control behavior build a riding maneuver. In the computing unit, the measured data within one segment for at least one of the segments is analyzed by computing at least one characteristic value for the respective segment and/or the sequence of determined segments is analyzed. Finally, an analysis result indicating the rider performance or rider skills is output.

DE 10 2005 059216 A1 teaches a motorcycle equipped with sensor units measuring the longitudinal and the transversal acceleration as well as the roll angle. The information is transmitted to a processing and evaluating unit in order to be compared to saved reference data of other drivers or of previous rides. The number of bends passed on a trip and the roll angle of the vehicle achieved when driving around the particular bend are recorded and displayed including data about the specific quality of the bend and other related information.

EP 2 517 952 A1 teaches a saddle riding type vehicle comprising a rider characteristic determining apparatus capable of determining characteristics of a rider. The rider's characteristics are determined based on a turning movement of the saddle riding type vehicle that reflects results of the rider controlling the saddle riding type vehicle. A turning performance score of the vehicle is calculated based on at least one of vehicle state amounts of a roll direction, a pitch direction and a caster angle which influence the steering angle of the saddle riding type vehicle. A turning characteristic of the saddle riding type vehicle is evaluated.

CITATION LIST

PATENT DOCUMENT

     Patent Document 1: Japanese Patent No. 6146865
     Patent Document 2: Japanese Patent Application Publication No. 2017-187812

SUMMARY OF INVENTION

TECHNICAL PROBLEM

Since the voice-information-providing apparatus of Patent Document 1 acquires information on a driving skill in the entire corner, a driving skill for the entire corner is evaluated, and data on a result of this evaluation is output. In the driving assist method of Patent Document 2, curve information on the entire corner is output.

As disclosed in Patent Document 1, data on a vehicle traveling state of a leaning vehicle on a corner (vehicle-traveling-state data) is used for, for example, evaluation of a driving skill of a rider. To enhance accuracy of such evaluation, vehicle-traveling-state data that can enhance evaluation accuracy is required.

In general, to increase accuracy of output data, it may be possible to increase data resolution. However, when data resolution is increased, a load of a hardware resource for processing data increases.

As described above, it has been difficult to achieve both increase in accuracy of vehicle-traveling-state data of a leaning vehicle and suppression of an increase in load of a hardware resource for outputting the output data.

It is therefore an object of the present teaching to provide a leaning-vehicle-data-output apparatus capable of increasing accuracy of vehicle-traveling-state data when a leaning vehicle is turning left on a corner while leaning leftward or turning right on the corner while leaning rightward while suppressing an increase in load of a hardware resource.

SOLUTION TO THE PROBLEM

The inventor of the present teaching studied cornering of a leaning vehicle. A vehicle traveling state when the leaning vehicle is traveling on a corner differs among corner entry in which the vehicle body leans toward a turning center, turning in which the leaning state of the vehicle body is maintained, and rising in which the vehicle body rises from the leaning state. Thus, the inventor conceived that in the case of outputting data concerning a vehicle traveling state of the leaning vehicle on the corner, data resolution is not enhanced but the corner is divided into a plurality of sections and data in each section is output in a manner as described below.

A posture of the leaning vehicle changes depending on an acceleration or a deceleration acting on a front wheel and a rear wheel. In addition, in the leaning vehicle, a leaning state of the vehicle body in the left direction or in the right direction also changes depending on a steering operation by a rider and load transfer. With such characteristics of the leaning vehicle, the vehicle traveling state of the leaning vehicle during traveling on a corner significantly differs among a posture in which the vehicle body leans toward a turning center at corner entry, a posture in which the leaning vehicle turns while maintaining a leaning state of the vehicle body, and a posture in which the vehicle body rises at corner rise. In view of this, the inventor of the present teaching found that data reflecting a state of traveling of the leaning vehicle can be obtained by dividing vehicle-traveling-state data of the leaning vehicle acquired during traveling on a corner into, for example, three states of a leaning state, a leaning maintaining state, and a rising state. The inventor found that when leaning-vehicle-traveling-state data reflecting a vehicle traveling state of the leaning vehicle is obtained, driving skill evaluation corresponding to corner entry, turning, and rising of the leaning vehicle can be obtained.

In view of this, the inventor conceived that a corner on which a leaning vehicle turns in a leaning state is divided into sections, and data on a traveling state of the leaning state in each section is obtained so that driving skill evaluation is performed for each section.

By processing the vehicle-traveling-state data on each section obtained by dividing a corner into sections, a computation device can compute part of data while the leaning vehicle travels on the corner. Accordingly, in processing the vehicle-traveling-state data by the computation device, flexibility of the computation process can be enhanced. That is, with the data processing described above, in processing the vehicle-traveling-state data by the computation device, the computation device can enhance flexibility of the computation process in the computation device such as a change of the order of data processing or advancing the timing of data processing, for example. In addition, the data processing described above enables the computation device to reduce the grade of a resource for the same computation load or to perform another computation process for the same resource, and thus, flexibility in resources can be enhanced.

Thus, not by increasing resolution of vehicle-traveling-state data but by outputting vehicle-traveling-state data in a plurality of sections obtained by dividing a corner on which the leaning vehicle travels, it is possible to enhance quality of output of, for example, a driving evaluation device or a driving assistance device while suppressing an increase in load of a hardware resource.

Through an intensive study, the inventor of the present teaching arrived at the following configuration.

A leaning-vehicle-data-output apparatus according to claim 1 includes: a physical-quantity-data acquirer configured to acquire physical quantity data concerning a behavior of a leaning vehicle when the leaning vehicle turns left on a corner while leaning leftward or turns right on the corner while leaning rightward, the leaning vehicle including a vehicle body and an operation input device, the vehicle body being configured to lean leftward while turning to the left and lean rightward while turning to the right, the operation input device being configured to be operated by a rider; a vehicle-traveling-state-data generator configured to generate vehicle-traveling-state data based on the acquired physical quantity data; and a vehicle-traveling-state-data-output controller configured to output the vehicle-traveling-state data, wherein a single corner which comprises a deceleration portion, an entry portion, in which the leaning vehicle performs an operation of entering the corner, a turning portion, a rising portion, in which the leaning vehicle performs an operation of rising after turning, and an acceleration portion, and on which the leaning vehicle turns while leaning to perform yaw motion continuously in an identical direction, is divided into a plurality of sections including a section including the deceleration portion in which the leaning vehicle decelerates at a timing earlier than entry portion, the vehicle-traveling-state-data generator is configured to generate vehicle-traveling-state data of the leaning vehicle in each of the plurality of sections of the single corner based on the acquired physical quantity data, the physical quantity data being acquired by the physical-quantity-data acquirer and concerning the behavior of the leaning vehicle while the leaning vehicle turns left on the corner while leaning leftward or turns right on the corner while leaning rightward, the plurality of sections including the section including the deceleration portion, and the vehicle-traveling-state-data-output controller is configured to output the vehicle-traveling-state data in each of the sections.

The vehicle traveling state of the leaning vehicle differs among a plurality of sections of a single corner on which the leaning vehicle turns while leaning to perform yaw motion continuously in the same direction. The vehicle-traveling-state-data generator generates vehicle-traveling-state data of the leaning vehicle in each section of the corner based on physical quantity data concerning a behavior of the leaning vehicle. In turning on a corner, in the case of a leaning vehicle, the vehicle traveling state of the leaning vehicle significantly changes. In each of the sections obtained by dividing the single corner on which the leaning vehicle turns while leaning to perform yaw motion continuously in the same direction, into a plurality of sections, vehicle-traveling-state data of the leaning vehicle is generated based on physical quantity data concerning a behavior of the leaning vehicle described above. Consequently, it is possible to increase accuracy of the vehicle-traveling-state data without enhancing resolution of the vehicle-traveling-state data.

Thus, it is possible to obtain the leaning-vehicle-traveling-state-data-output device capable of increasing accuracy of vehicle-traveling-state data of the leaning vehicle while suppressing an increase in load of a hardware resource.

The expression that the leaning vehicle performs yaw motion continuously in the same direction means a state in which the leaning vehicle turning on a curve moves continuously clockwise or semi-clockwise about an axis extending in the top-bottom direction of the leaning vehicle and the direction does not change, when the leaning vehicle is seen from above. The state in which the leaning vehicle performs yaw motion continuously in the same direction may be determined by using a yaw angle, a yaw rate, and orientation of the leaning vehicle.

The vehicle-traveling-state data output from the leaning-vehicle-data-output apparatus can be used in performing driving evaluation or driving assistance of a rider. The leaning-vehicle-data-output apparatus may be disposed separately from the driving evaluation device or the driving assistance device, or may be disposed in the driving evaluation device or the driving assistance device.

In another aspect, the leaning-vehicle-data-output apparatus according to the present teaching preferably has the following configuration. The corner is divided into the plurality of sections such that the entry portion and the rising portion are not included in an identical section.

While the leaning vehicle turns on the corner, a vehicle traveling state of the leaning vehicle in the entry portion in which the leaning vehicle performs an operation of entering the corner, and a vehicle traveling state of the leaning vehicle in the rising portion in which the leaning vehicle performs an operation of rising after turning are closely related to a posture of the leaning vehicle. In the entry portion, the leaning vehicle leans toward a turning center, whereas in the rising portion, the leaning vehicle rises in the direction opposite to the turning center. That is, the moving direction of the leaning vehicle in the roll direction is opposite to each other between the entry portion and the rising portion.

Thus, in a case where the leaning-vehicle-data-output apparatus generates and outputs vehicle-traveling-state data of the leaning vehicle, the corner is divided such that the entry portion and the rising portion are not included in the same section. Thus, vehicle-traveling-state data reflecting a vehicle traveling state in each of the entry portion and the rising portion can be accurately generated.

The entry portion refers mainly to a portion of the corner in which the leaning vehicle leans toward a turning center in entering the corner. The rising portion refers mainly to a portion of the corner in which the leaning vehicle performs an operation of rising from a leaning state after turning.

In another aspect, the leaning-vehicle-data-output apparatus according to the present teaching preferably has the following configuration. The plurality of sections includes at least one section between an entry section including the entry portion and a rising section including the rising portion.

With this configuration, when the leaning vehicle travels on a corner, the corner can be more reliably divided into a section including the entry portion and a section including the rising portion. Thus, in each of the entry portion and the rising portion, vehicle-traveling-state data reflecting a vehicle traveling state of each portion can be accurately generated.

In addition, with the configuration, the corner on which the leaning vehicle travels can be divided into three or more sections. Accordingly, in each section of the corner, vehicle-traveling-state data reflecting a vehicle traveling state of the leaning vehicle can be more accurately generated.

In another aspect, the leaning-vehicle-data-output apparatus according to the present teaching preferably has the following configuration. The leaning-vehicle-data-output apparatus further includes: an indexed data generator configured to generate an indexed data in each of the sections of the corner based on the vehicle-traveling-state data of the leaning vehicle in each of the sections of the corner; and an indexed-data-output controller configured to output the indexed data.

With this configuration, the leaning-vehicle-data-output apparatus can generate and output indexed data based on vehicle-traveling-state data of the leaning vehicle, in each section of the corner.

The indexed data is not a dimensional physical quantity represented by using units including a basic amount (e.g., mass, length, time, current, thermodynamic temperature, substance amount, and luminous intensity) but is data including a dimensionless index. The indexed data includes, for example, data used for respective applications of the leaning-vehicle-data-output apparatus, such as a driving skill or a score.

In another aspect, the leaning-vehicle-data-output apparatus according to the present teaching preferably has the following configuration. The vehicle-traveling-state-data generator generates vehicle-traveling-state data based on the acquired physical quantity data in each of the sections, and generates vehicle-traveling-state data based on the acquired physical quantity data in an entire section of the corner. The vehicle-traveling-state-data-output controller outputs vehicle-traveling-state data in each of the sections, and outputs vehicle-traveling-state data in the entire section of the corner.

Accordingly, not only the vehicle-traveling-state data in each section of the corner but also the vehicle-traveling-state data in the entire section of the corner can be output. Thus, vehicle-traveling-state data on the corner can be output in more detail.

In another aspect, the leaning-vehicle-data-output apparatus according to the present teaching preferably has the following configuration. The vehicle-traveling-state-data-output controller outputs the vehicle-traveling-state data in each of the sections of the corner in a format enabling intercomparison.

Accordingly, it is possible to compare vehicle-traveling-state data output in each section of the corner. Thus, a difference in vehicle-traveling-state data among the sections of the corner can be more reliably obtained.

The terminology used herein is for the purpose of describing particular embodiments only and is not intended to be limiting of the invention.

As used herein, the term "and/or" includes any and all combinations of one or more of the associated listed items.

It will be further understood that the terms "including," "comprising" or "having" and variations thereof when used in this specification, specify the presence of stated features, steps, elements, components, and/or their equivalents but do not preclude the presence or addition of one or more, steps, operations, elements, components, and/or groups thereof.

It will be further understood that the terms "mounted," "connected," "coupled," and/or their equivalents are used broadly and encompass both direct and indirect mounting, connecting and coupling. Further, "connected" and "coupled" are not restricted to physical or mechanical connections or couplings, and can include connections or couplings, whether direct or indirect.

Unless otherwise defined, all terms (including technical and scientific terms) used herein have the same meaning as commonly understood by one having ordinary skill in the art to which this invention belongs.

It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

In describing the invention, it will be understood that a number of techniques and steps are disclosed. Each of these has individual benefit and each can also be used in conjunction with one or more, or in some cases all, of the other disclosed techniques.

An embodiment of a leaning-vehicle-data-output apparatus according to the present teaching will be herein described.

In the following description, numerous specific details are set forth in order to provide a thorough understanding of the present invention. It will be evident, however, to one skilled in the art that the present invention may be practiced without these specific details.

The present disclosure is to be considered as an exemplification of the invention, and is not intended to limit the invention to the specific embodiments illustrated by the figures or description below.

[Leaning Vehicle]

A leaning vehicle herein is a vehicle that turns in a leaning posture. Specifically, the leaning vehicle is a vehicle that leans leftward when turning to the left and leans rightward when turning to the right in the left-right direction of the vehicle. The leaning vehicle may be a single-passenger vehicle or a vehicle on which a plurality of passengers can ride. The leaning vehicle includes all the types of vehicles that turn in leaning postures, such as three-wheeled vehicles and four-wheeled vehicles, as well as two-wheeled vehicles.

The leaning vehicle may include a driving source that generates a driving force to be supplied to wheels and an accelerator operator as an input operator for operating an output of the driving source. The leaning vehicle may include a front suspension that elastically supports a front wheel to the vehicle body. The leaning vehicle may include a rear suspension that elastically supports a rear wheel to the vehicle body. The leaning vehicle may include a front wheel brake device that applies a braking force to the front wheel, and a front-wheel-brake operator that is an input operator for operating driving of the front-wheel-brake device. The leaning vehicle may include a rear-wheel-brake device that applies a braking force to a rear wheel, and a rear-wheel-brake operator that is an input operator for operating driving of the rear-wheel-brake device. The leaning vehicle may include a cooperative brake mechanism in which a front brake device and a rear brake device cooperate by operating the front-brake operator or the rear-brake operator.

The driving source includes an engine, a motor, a hybrid system including the engine and the motor, and so forth.

[Behavior of Leaning Vehicle]

A behavior of a leaning vehicle herein refers to a behavior of the leaning vehicle while the leaning vehicle travels on a corner. The behavior of the leaning vehicle includes at least one of an operation of leaning the leaning vehicle, an operation of maintaining the leaning state of the leaning vehicle, or an operation of raising the leaning vehicle.

[Corner]

A corner herein refers to a single corner on which a leaning vehicle turns while leaning to perform yaw motion continuously in the same direction. Determination on a corner may be performed based on, for example, physical quantity data concerning yaw motion, physical quantity data concerning roll motion, data obtained from a GPS, or map information.

[Physical Quantity Data]

Physical quantity data herein refers to data including at least one of a physical quantity concerning yaw motion of the leaning vehicle, a physical quantity concerning roll motion, and a physical quantity concerning pitch motion, these physical quantities obtained during traveling of a leaning vehicle. The physical quantity data concerns at least one of yaw, roll, or pitch, and including at least one type of information of a speed, an acceleration, a jerk, an angle, an angular velocity, an angular acceleration, or positional information. The physical quantity data may be combined with other data such as time information, weather, temperature, road surface state, or a slope state.

[Physical Quantity Data on Behavior of Leaning Vehicle]

Physical quantity data concerning a behavior of a leaning vehicle herein refers to physical quantity data that varies depending on a posture and an operation of the leaning vehicle while the leaning vehicle travels on a single corner while turning in a leaning state such that the leaning vehicle performs yaw motion continuously in the same direction. The physical quantity data concerning a behavior of the leaning vehicle includes, for example, accelerations in three-axis directions of "front-rear," "left-right," and "top-bottom" of the leaning vehicle, and angular accelerations in three-axis directions of "yaw," roll," and "pitch."

[Physical Quantity Concerning Yaw Motion]

A physical quantity concerning yaw motion herein includes a value of an angle of rotation (yaw angle), a value of a yaw rate that is a speed of change of rotation angle (yaw angular velocity), and a value of a speed of change of the yaw rate (yaw angular acceleration) in yawing (yaw motion) that is rotation motion about an axis extending in the top-bottom direction of the vehicle body.

[Physical Quantity Concerning Roll Motion]

A physical quantity concerning roll motion herein includes a value of a leaning angle (roll angle), a value of a roll rate that is a speed of change of a leaning angle (roll angular velocity), and a value of a speed of change of the roll rate (roll angular acceleration) in rolling (roll motion) that is rotation motion about an axis extending in the front-rear direction of the vehicle body.

[Physical Quantity Concerning Pitch Motion]

A physical quantity concerning pitch motion herein includes a value of a rotation angle (pitch angle), a value of a pitch rate that is a speed of change of a rotation angle (pitch angular velocity), and a value of a speed of change of the pitch rate (pitch angular acceleration) in pitching (pitch motion) that is rotation motion about an axis extending in the left-right direction of the vehicle body.

[Vehicle-traveling-state Data]

Vehicle-traveling-state data herein includes at least one of physical quantity data concerning at least one of yaw motion, roll motion, or pitch motion acquired in a vehicle during traveling, data concerning acceleration/deceleration of the vehicle, or data concerning a steering angle. The vehicle-traveling-state data may be obtained by combining at least one of the data described above with data other than the data type described above.

[Zero Crossing]

Zero crossing herein refers to switching of physical quantity data between positive and negative. A zero crossing point is a predetermined time range including a moment at which physical quantity data is switched between positive and negative. The predetermined time range is determined with reference to the moment of switching described above.

[Driving Skill Evaluation]

Driving skill evaluation herein refers to driving capacity evaluation obtained from a result of determination of a rider's driving skill based on a driving skill criterion. For example, the driving skill evaluation is a result of evaluation based on smooth motion or a result of evaluation based on quick motion.

[Smooth Motion]

Smooth motion herein refers to motion of a leaning vehicle in a case where actual turning motion of a leaning vehicle corresponds to turning motion predicted based on a rider's intention while the leaning vehicle is traveling around a corner.

[Quick Motion]

Quick motion herein refers to motion of a leaning vehicle in a case where actual turning motion of a leaning vehicle corresponds to turning motion predicted based on a rider's intention in order to obtain a turning force of the leaning vehicle when the leaning vehicle is traveling around a corner.

ADVANTAGEOUS EFFECTS OF INVENTION

A leaning-vehicle-data-output apparatus according to one embodiment of the present teaching can increase accuracy of vehicle-traveling-state data when a leaning vehicle turns left on a corner while leaning leftward or turns right on the corner while leaning rightward, while suppressing an increase of load of a hardware resource.

BRIEF DESCRIPTION OF DRAWINGS

[FIG. 1] FIG. 1 is a left side view of a leaning vehicle according to an embodiment.
[FIG. 2] FIG. 2 is a functional block diagram illustrating a configuration of a leaning-vehicle-traveling-state-data-output device according to an embodiment.
[FIG. 3] FIG. 3 is a functional block diagram a configuration of a leaning-vehicle-driving-skill-determination apparatus according to an embodiment.
[FIG. 4] FIG. 4 is a functional block diagram illustrating a specific configuration of a leaning-vehicle-driving-skill-determination apparatus according to an embodiment.
[FIG. 5] FIG. 5 is a graph for describing an example of turning motion determination performed by a turning motion determiner according to an embodiment.
[FIG. 6] FIG. 6 is a graph showing an example of component separation of a yaw rate according to an embodiment.
[FIG. 7] FIG. 7 is a graph for describing an example of a section dividing process of a corner according to an embodiment.
[FIG. 8] FIG. 8 is a graph showing an example of a low-frequency-band component g(t) and a high-frequency-band component f(t) of a yaw rate in a turning motion section according to an embodiment.
[FIG. 9] FIG. 9 is a view showing an example of driving skill evaluation according to an embodiment.
[FIG. 10] FIG. 10 is a flowchart depicting a section-dividing-process operation on a corner according to an embodiment.
[FIG. 11] FIG. 11 is a flowchart depicting an operation of driving skill determination according to an embodiment.
[FIG. 12] FIG. 12 is a view illustrating an entire configuration of a leaning vehicle and a configuration of a leaning-vehicle-traveling-state-data-output device.
[FIG. 13] FIG. 13 schematically illustrates examples in each of which a corner is divided into a plurality of sections.
[FIG. 14] FIG. 14 is a view schematically illustrating a travel path in a case where a leaning vehicle turns rightward twice.

DESCRIPTION OF EMBODIMENT

An embodiment of the present teaching will be described hereinafter with reference to the drawings. The dimensions of components in the drawings do not strictly represent actual dimensions of the components and dimensional proportions of the components.
In the following description, arrow F in the drawings represents a forward direction of a leaning vehicle. Arrow RR in the drawings represents a rearward direction of the leaning vehicle. Arrow U in the drawings represents an upward direction of the leaning vehicle. The front, the rear, the left, and the right respectively refer to the front, the rear, the left, and the right when seen from a rider of the leaning vehicle. The top-bottom direction refers to a top-bottom direction when seen from the rider of the leaning vehicle.

<Overall Configuration>

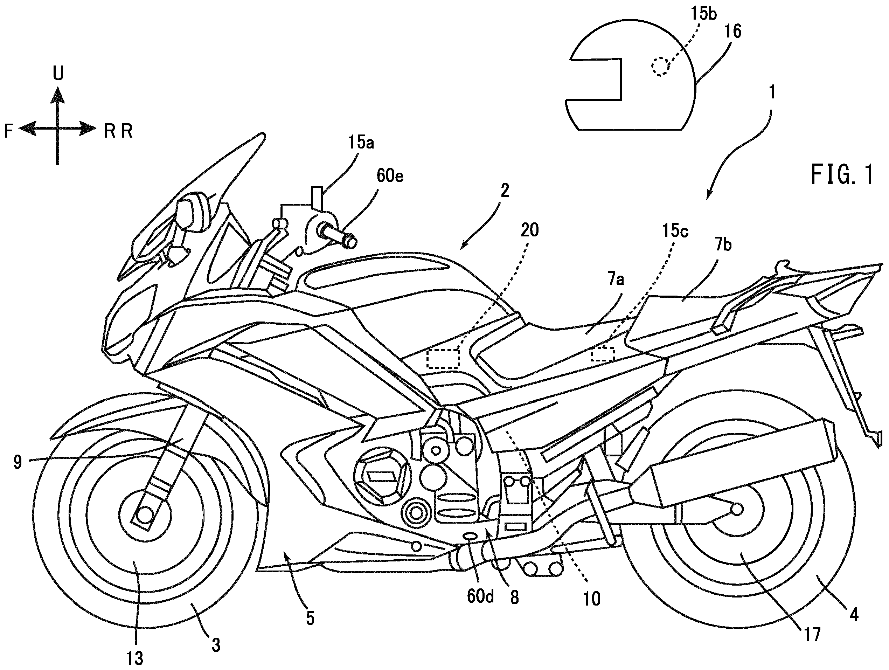

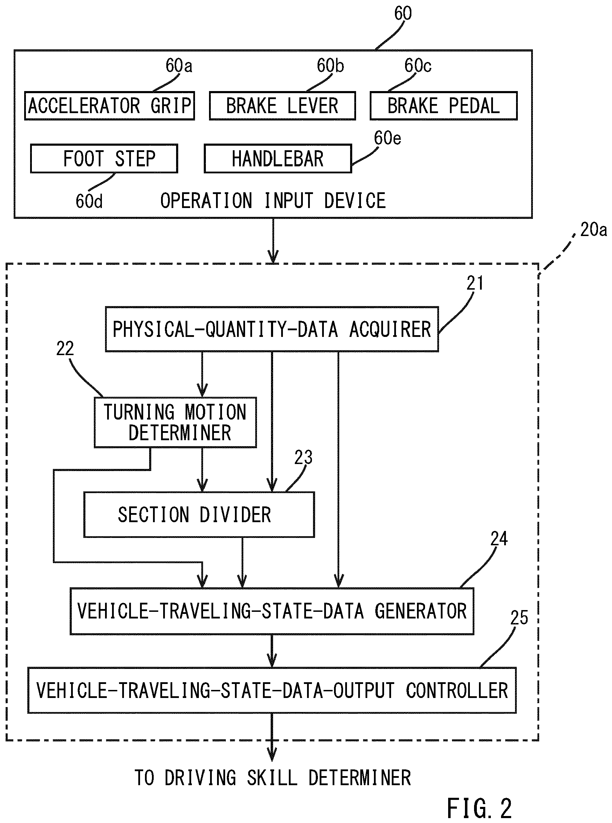

FIG. 1 is a left side view of a leaning vehicle 1 according to an embodiment of the present teaching. The leaning vehicle 1 is, for example, a motorcycle. The leaning vehicle 1 is a leaning vehicle configured to lean leftward when turning to the left and to lean rightward when turning to the right. The leaning vehicle 1 includes a vehicle body 2, a front wheel 3, a rear wheel 4, and a leaning-vehicle-driving-skill-determination apparatus 20 (leaning-vehicle-data-output apparatus).
The vehicle body 2 includes a vehicle body cover 5, a handlebar 60e, a front seat 7a, a tandem seat 7b, a power unit 8 (driving source), and a vehicle body frame 10. The vehicle body frame 10 supports components such as the vehicle body cover 5, the handlebar 60e, the front seat 7a, the tandem seat 7b, and the power unit 8.
In this embodiment, the vehicle body 2 is a structure including the vehicle body frame 10 and supporting components of the leaning vehicle 1.
The handlebar 60e is coupled to an upper end portion of a steering shaft. The handlebar 60e is provided with an accelerator grip 60a (accelerator operator, see FIG. 2). The handlebar 60e is also provided with a brake lever 60b (front-wheel-brake operator, see FIG. 2).

A pair of extendable front forks 9 (front suspensions) is coupled to a lower end potion of the steering shaft. Accordingly, the front forks 9 swing in the left direction or in the right direction by rotation operation of the handlebar 60e. The front wheel 3 is rotatably attached to lower end portions of the front forks 9. The front forks 9 extend and contract to thereby absorb vibrations of the front wheel 3 in the top-bottom direction. A front wheel brake 13 (front-wheel-brake device) is attached to the lower end portions of the front forks 9. The front wheel brake 13 applies a braking force to the front wheel 3 by operating the brake lever 60b.

The vehicle body frame 10 is provided with a brake pedal 60c (rear-wheel-brake operator, see FIG. 2) and a foot step 60d for receiving a load. A rear wheel brake 17 (rear-wheel-brake device) provided to the rear wheel 4 is caused to apply a braking force to the rear wheel 4 by operating the brake pedal 60c. Although not shown, the rear wheel 4 is elastically supported on the vehicle body frame 10 by a rear suspension.

The accelerator grip 60a, the brake lever 60b, the brake pedal 60c, the foot step 60d that receives a load, and the handlebar 60e constitute an operation input device 60 (see FIG. 2). The leaning vehicle 1 travels in response to an operation input to the operation input device 60 by a rider.

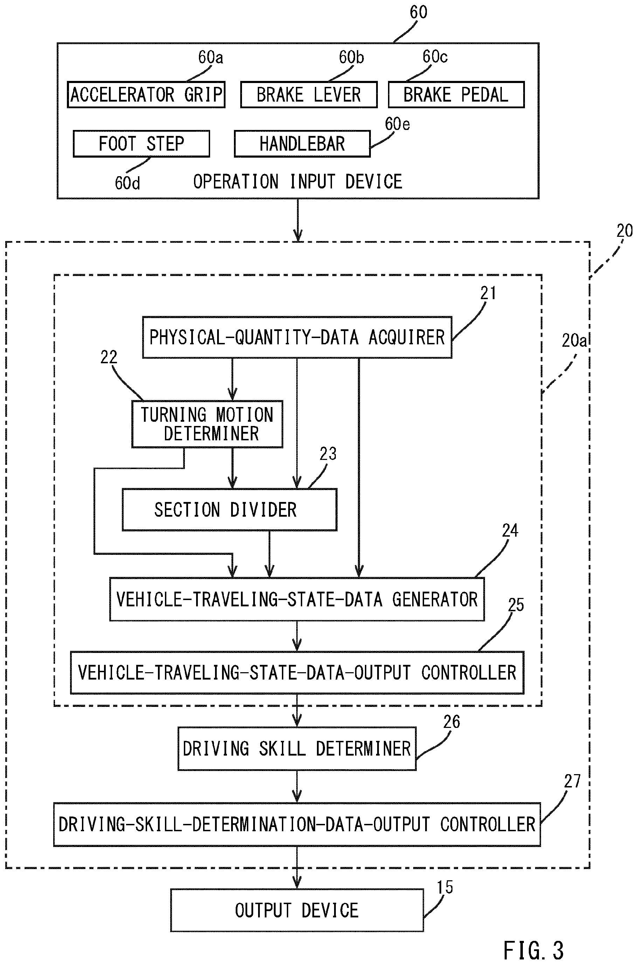

The handlebar 60e is provided with a monitor 15a constituting a vision device of an output device 15 (see FIG. 3). The front seat 7a is provided with a vibrator 15c constituting a tactile device of the output device 15. A helmet 16 to be worn by a rider is provided with a speaker 15b constituting an auditory device of the output device 15. The speaker 15b outputs voice to the rider.

In this embodiment, the leaning-vehicle-driving-skill-determination apparatus 20 including a leaning-vehicle-traveling-state-data-output device 20a is disposed in the vehicle body 2. The leaning-vehicle-driving-skill-determination apparatus 20 detects vehicle-traveling-state data of a leaning vehicle that changes depending on an operation of the operation input device 60 by a rider, and based on the vehicle-traveling-state data, presents a driving-skill-evaluation result to the rider during traveling of the leaning vehicle 1.

In this embodiment, the vehicle-traveling-state data includes physical quantity data concerning at least one of yaw motion, roll motion, or pitch motion acquired during traveling of the leaning vehicle 1, data concerning acceleration/deceleration of the leaning vehicle 1, or data concerning a steering angle.

In turning of the leaning vehicle 1 having the configuration described above, a rider of the leaning vehicle 1 drives the leaning vehicle 1, for example, in the manner described below to turn around a corner. The rider of the leaning vehicle 1 first returns the accelerator grip 60a subjected to rotation operation to an original position and actuates the front wheel brake 13 and the rear wheel brake 17. At this time, the rider adjusts the actuation amounts of the front wheel brake 13 and the rear wheel brake 17 and the timing of actuating at least one of the front wheel brake 13 or the rear wheel brake 17 by returning the accelerator grip 60a to the original position as appropriate such that the front wheel 3 and the rear wheel 4 are not locked. After the leaning vehicle 1 has been sufficiently decelerated, the rider releases the front wheel brake 13 and the rear wheel brake 17, performs steering operation with the handlebar 60e in the order of reverse steering and forward steering, and performs load transfer to thereby cause the vehicle body 2 to lean toward the turning center. Thereafter, in order to maintain the turning state of the leaning vehicle 1, the rider turns the leaning vehicle 1 while controlling a steering rudder angle and a leaning angle and a vehicle speed of the vehicle body 2 by, for example, steering operation, load transfer, accelerator operation, and operation of the rear wheel brake 17. After turning of the leaning vehicle 1, the rider gradually raises the vehicle body 2 by, for example, steering operation, load transfer, and accelerator operation. Such operation of the leaning vehicle 1 is an example of operation in turning. Thus, the leaning vehicle 1 may be caused to turn by other operation techniques.

In the manner described above, the rider operates driving of the front wheel brake 13, driving of the rear wheel brake 17, driving of the power unit 8, and a posture of the vehicle body 2 by using the operation input device 60 to thereby cause the leaning vehicle 1 to turn.

<Configuration of Leaning-vehicle-traveling-state-data-output device>

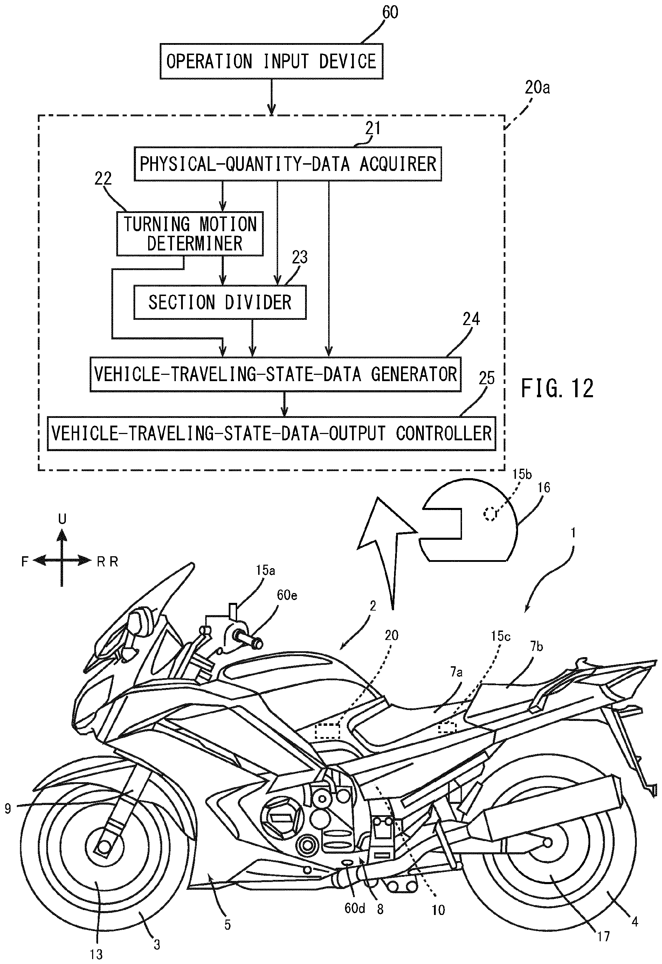

An example of a configuration of the leaning-vehicle-traveling-state-data-output device 20a will now be described with reference to FIGS. 2 and 12. FIG. 2 is a functional block diagram illustrating a configuration of the leaning-vehicle-traveling-state-data-output device 20a. FIG. 12 is a view illustrating an entire configuration of the leaning vehicle 1 and a configuration of the leaning-vehicle-traveling-state-data-output device 20a.

The leaning-vehicle-traveling-state-data-output device 20a includes a physical-quantity-data acquirer 21, a turning motion determiner 22, a section divider 23, a vehicle-traveling-state-data generator 24, and a vehicle-traveling-state-data-output controller 25.

The leaning-vehicle-driving-skill-determination apparatus 20 including the leaning-vehicle-traveling-state-data-output device 20a (see FIG. 3) is constituted by, for example, an information processor incorporating the physical-quantity-data acquirer 21. The leaning-vehicle-driving-skill-determination apparatus 20 is disposed in the vehicle body 2. The information processor constituting the leaning-vehicle-driving-skill-determination apparatus 20 is preferably fixed to the vehicle body 2. Accordingly, it is possible to reduce inclusion of noise caused by vibrations in the leaning vehicle 1, in data detected by the physical-quantity-data acquirer 21.

The information processor may not incorporate the physical-quantity-data acquirer 21. The information processing device may be constituted by, for example, a portable terminal device such as a smartphone including a gyro sensor and an acceleration sensor. In this case, it is sufficient to install a predetermined application in the portable terminal device to thereby constitute the leaning-vehicle-traveling-state-data-output device 20a including the physical-quantity-data acquirer 21, the turning motion determiner 22, the section divider 23, the vehicle-traveling-state-data generator 24, and the vehicle-traveling-state-data-output controller 25. In the case where the leaning-vehicle-traveling-state-data-output device 20a is constituted by the portable terminal device, the portable terminal device is preferably configured to be more firmly fixed to the vehicle body 2. The firm fixing of the portable terminal device to the vehicle body 2 can reduce inclusion of noise caused by vibrations in the leaning vehicle 1, in data detected by the physical-quantity-data acquirer 21.

Alternatively, a driving skill determiner 26 and a driving-skill-determination-data-output controller 27 may be constituted by installing an application in the portable terminal device.

Alternatively, the information processing device may be a combination of a portable terminal device and a server. In this case, the portable terminal device may acquire data of physical quantity concerning a behavior of the leaning vehicle, and perform computation on the data to transmit a result of the computation (e.g., a driving-skill-evaluation result) to the server, or may transmit the data to the server so that the server performs computation on the data. The computation result may be output from the portable terminal device.

The physical-quantity-data acquirer 21 detects and acquires physical quantity data concerning a behavior of the leaning vehicle 1 when the leaning vehicle 1 turns left on a corner while leaning leftward or turns right on the corner while leaning rightward. The physical-quantity-data acquirer 21 detects at least one of accelerations in three-axis directions of "front-rear," "left-right," and "top-bottom" or angular accelerations in three-axis directions of "yaw," "roll," and "pitch." A rider operates the leaning vehicle 1 with a balance so that the leaning vehicle 1 turns on the corner. Thus, the leaning-vehicle-traveling-state-data-output device 20a acquires at least one of accelerations in three-axis directions of "front-rear," "left-right," and "top-bottom" or angular accelerations in three-axis directions of "yaw," "roll," and "pitch" as physical quantity data, and performs turning determination and corner division by using the physical quantity data as will be described later. Accordingly, it is possible to generate and output vehicle-traveling-state data depending on a behavior of the leaning vehicle 1 during traveling of the leaning vehicle 1 on the corner.

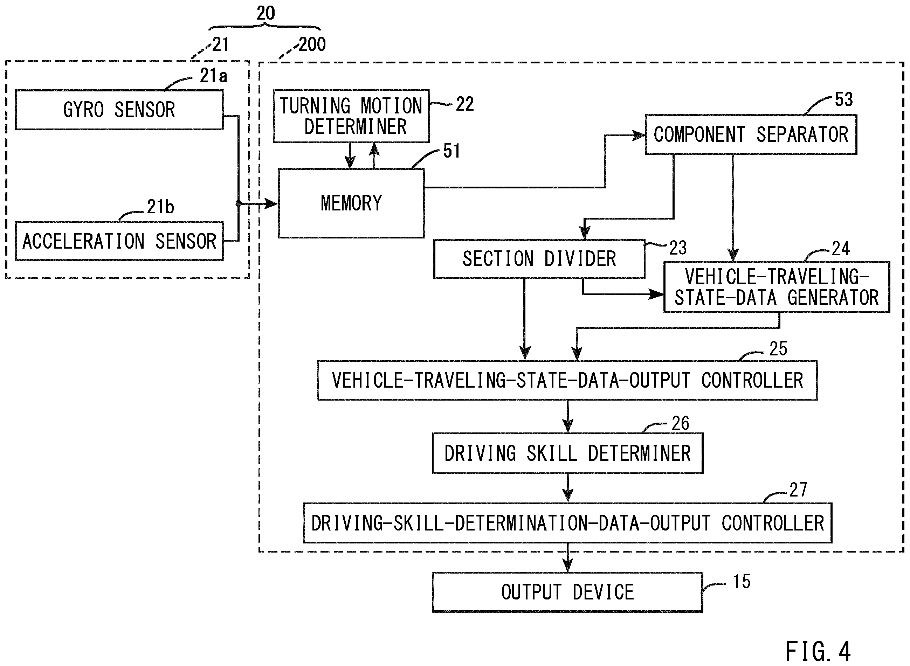

The physical-quantity-data acquirer 21 includes, for example, a gyro sensor 21a and an acceleration sensor 21b (see FIG. 4). The leaning-vehicle-driving-skill-determination apparatus 20 can calculate a vehicle speed and an acceleration of the leaning vehicle 1 by using the acceleration sensor 21b.

The physical-quantity-data acquirer 21 detects and acquires at least one of a physical quantity concerning yaw motion, a physical quantity concerning roll motion, and a physical quantity concerning pitch motion, of the leaning vehicle 1 during traveling of the leaning vehicle 1 by using the gyro sensor 21a (see FIG. 4). Physical quantity data acquired by the physical-quantity-data acquirer 21 are chronologically stored in a memory 51 (see FIG. 4). The physical-quantity-data acquirer 21 may include another sensor or a detector capable of acquiring physical quantity data concerning a behavior of the leaning vehicle 1 while the leaning vehicle 1 travels on a corner.

The physical-quantity-data acquirer 21 outputs the acquired data to the turning motion determiner 22, the section divider 23, and the vehicle-traveling-state-data generator 24.

The turning motion determiner 22 determines whether or not the leaning vehicle 1 has performed turning motion that is a target of driving skill determination of a rider. In this embodiment, the turning motion determiner 22 obtains a yaw rate based on physical quantity data concerning yaw motion output from the physical-quantity-data acquirer 21, and determines that a case where a state in which the obtained yaw rate is a given value or more continues for a given time or more is a turning motion state. The turning motion determiner 22 calculates a turning motion section by determining a turning motion state. The calculated turning motion section is a corner as a target of the leaning-vehicle-traveling-state-data-output device 20a. That is, the turning motion determiner 22 functions as a corner calculator for calculating a corner on which the leaning vehicle 1 performs turning motion. A detailed configuration of the turning motion determiner 22 will be described later.

The turning motion determiner 22 may determine whether or not the leaning vehicle 1 has performed turning motion as a target of driving skill determination of a rider, based on a roll rate or data obtained from a global positioning system (GPS) other than the yaw rate. Any conventional method enabling the calculation of a corner by the turning motion determiner 22 may be employed, other than the above-described method using a yaw rate, a roll rate, or data obtained by the GPS.

The section divider 23 divides a corner on which the leaning vehicle 1 turns into a plurality of sections based on physical quantity data acquired by the physical-quantity-data acquirer 21. The section divider 23 receives determination data of a turning state obtained by the turning motion determiner 22 and physical quantity data acquired by the physical-quantity-data acquirer 21. The section divider 23 divides a corner on which turning motion is determined to be performed by the turning motion determiner 22 into a plurality of sections by using the physical quantity data acquired by the physical-quantity-data acquirer 21. A detailed configuration of the section divider 23 will be described later.

In this embodiment, the physical-quantity-data acquirer 21 acquires vehicle-traveling-state data including physical quantity data while the leaning vehicle 1 is currently traveling. The acquired vehicle-traveling-state data is stored in the memory 51. The section divider 23 reads the vehicle-traveling-state data stored in the memory 51 and uses the data for a section dividing process. That is, the section divider 23 uses physical quantity data included in vehicle-traveling-state data of the currently traveling vehicle.

In traveling of the leaning vehicle 1 on a corner, the vehicle traveling state of the leaning vehicle 1 differs among an entry section, a turning section, and a rising section in the corner. That is, the vehicle traveling state of the leaning vehicle 1 differs in correspondence with an operation of leaning the vehicle, an operation of maintaining the vehicle in a leaning posture, and an operation of raising the vehicle, that are behaviors of the leaning vehicle 1, in each section of the corner. In this embodiment, the section divider 23 divides the corner into the entry section, the turning section, and the rising section. As will be described later, the vehicle-traveling-state-data generator 24 generates vehicle-traveling-state data including physical quantity data of each section. Consequently, the leaning-vehicle-traveling-state-data-output device 20a can acquire leaning-vehicle-traveling-state data including physical quantity data corresponding to a behavior of the leaning vehicle 1 in each section. Thus, it is possible to increase accuracy of leaning-vehicle-traveling-state data including physical quantity data corresponding to a behavior of the leaning vehicle 1.

The physical-quantity-data acquirer 21 outputs vehicle-traveling-state data acquired by the physical-quantity-data acquirer 21 to the vehicle-traveling-state-data generator 24. Accordingly, information on a plurality of sections obtained by division is input from the section divider 23 to the vehicle-traveling-state-data generator 24. In this embodiment, the vehicle-traveling-state-data generator 24 receives information corresponding to each of the entry section, the turning section, and the rising section.

The vehicle-traveling-state-data generator 24 generates vehicle-traveling-state data corresponding to each section of the corner by using the vehicle-traveling-state data acquired from the physical-quantity-data acquirer 21. A detailed configuration of the vehicle-traveling-state-data generator 24 will be described later.

The vehicle-traveling-state data corresponding to each section and generated by the vehicle-traveling-state-data generator 24 is input to the vehicle-traveling-state-data-output controller 25. The vehicle-traveling-state-data-output controller 25 outputs the generated vehicle-traveling-state data corresponding to each section to, for example, a calculation unit that performs a next process. In this embodiment, vehicle-traveling-state data corresponding to each section is input to the driving skill determiner 26 that determines a driving skill.

<Configuration of Leaning-vehicle-driving-skill-determination Apparatus>

An example of a configuration of the leaning-vehicle-driving-skill-determination apparatus 20 will now be described with reference to FIG. 3. FIG. 3 is a functional block diagram illustrating a configuration of the leaning-vehicle-driving-skill-determination apparatus 20.

The leaning-vehicle-driving-skill-determination apparatus 20 includes the leaning-vehicle-traveling-state-data-output device 20a described above, the driving skill determiner 26, and the driving-skill-determination-data-output controller 27. Since the configuration of the leaning-vehicle-traveling-state-data-output device 20a has been described above, configurations of the driving skill determiner 26 and the driving-skill-determination-data-output controller 27 will be described below.

The driving skill determiner 26 receives vehicle-traveling-state data output from the leaning-vehicle-traveling-state-data-output device 20a. The driving skill determiner 26 determines a driving skill for each section by using the received vehicle-traveling-state data, and generates driving-skill-determination data as driving skill evaluation from the determination result, and outputs the driving-skill-determination data to the driving-skill-determination-data-output controller 27. A detailed configuration of the driving skill determiner 26 will be described later.

The driving-skill-determination-data-output controller 27 outputs driving-skill-determination data as driving skill evaluation for each section generated by the driving skill determiner 26 to the output device 15 in real time during traveling of the leaning vehicle 1. The output device 15 is constituted by at least one of the speaker 15b as an auditory device, the vibrator 15c as a tactile device, or the monitor 15a as a vision device. Thus, the driving-skill-determination-data-output controller 27 outputs driving-skill-determination data as driving skill evaluation to at least one of the speaker 15b, the vibrator 15c, or the monitor 15a in real time.

In the case of constituting the leaning-vehicle-driving-skill-determination apparatus 20 by installing an application in a smartphone, a monitor of the smartphone can be used as the monitor 15a as vision device. In this case, the driving-skill-evaluation result is displayed on the monitor of the smartphone.

As described above, the driving-skill-determination-data-output controller 27 outputs a driving-skill-evaluation result acquired for each section of the corner during traveling of the leaning vehicle 1 to at least one of the auditory device, the tactile device, or the vision device during the traveling of the leaning vehicle 1. Accordingly, the rider can confirm evaluation of a driving skill for each section of the corner during traveling of the leaning vehicle 1. The leaning-vehicle-driving-skill-determination apparatus 20 can present more detailed driving skill evaluation to the rider of the leaning vehicle 1. The driving-skill-determination-data-output controller 27 may acquire a driving-skill-evaluation result after traveling of the leaning vehicle 1. The driving-skill-determination-data-output controller 27 may output a driving-skill-evaluation result after traveling of the leaning vehicle 1.

A specific example of the leaning-vehicle-driving-skill-determination apparatus 20 including the leaning-vehicle-traveling-state-data-output device 20a according to this embodiment will be described with reference to FIG. 4. The leaning-vehicle-driving-skill-determination apparatus 20 according to this embodiment is constituted by an information processor incorporating the physical-quantity-data acquirer 21. The information processor is fixed to the vehicle body 2 of the leaning vehicle 1.

The leaning-vehicle-driving-skill-determination apparatus 20 includes the physical-quantity-data acquirer 21 and a controller 200. Physical quantity data of the leaning vehicle 1 acquired by the physical-quantity-data acquirer 21 is input to the controller 200.

In this embodiment, the physical-quantity-data acquirer 21 includes the gyro sensor 21a and the acceleration sensor 21b as described above. The gyro sensor 21a and the acceleration sensor 21b are disposed in the information processor constituting the leaning-vehicle-driving-skill-determination apparatus 20.

The gyro sensor 21a detects physical quantity data concerning each of a yaw rate, a yaw angle, a roll rate, a roll angle, a pitch rate, and a pitch angle of the leaning vehicle 1. The physical quantity data concerning these angular velocities and angles detected by the gyro sensor 21a are input to the controller 200.

The acceleration sensor 21b detects an acceleration of the leaning vehicle 1. The acceleration of the leaning vehicle detected by the acceleration sensor 21b is input to the controller 200. The controller 200 calculates a vehicle speed from the input acceleration.

When a rider steers the handlebar 60e of the leaning vehicle 1 in turning on a curve, the yaw angle, the yaw rate, and the steering angle of the leaning vehicle 1 change. When the rider turns the vehicle body 2 of the leaning vehicle 1 toward the center of the curve, the roll angle and the roll rate of the leaning vehicle 1 change. When the leaning vehicle 1 decelerates by a rider's operation of the brake lever 60b before the leaning vehicle 1 enters a corner or is traveling on the corner, the front fork 9 contracts. This contraction of the front fork 9 changes the pitch angle and the pitch rate of the leaning vehicle 1.

Accordingly, each data of the yaw angle, the yaw rate, the roll angle, the roll rate, the pitch angle, the pitch rate, and the vehicle speed is data indicating a vehicle traveling state of the leaning vehicle 1 during traveling.

A configuration of the controller 200 of the leaning-vehicle-driving-skill-determination apparatus 20 will now be described in detail.

As illustrated in FIG. 4, the controller 200 includes the turning motion determiner 22, the memory 51, a component separator 53, the section divider 23, the vehicle-traveling-state-data generator 24, the vehicle-traveling-state-data-output controller 25, the driving skill determiner 26 (indexed data generator), and the driving-skill-determination-data-output controller 27 (indexed-data-output controller).

Physical quantity data acquired by the physical-quantity-data acquirer 21 are chronologically stored in the memory 51.

<Turning Motion Determination>

The turning motion determiner 22 determines whether or not the leaning vehicle 1 has performed turning motion as a target of driving skill determination of a rider. In this embodiment, the turning motion refers to motion of the leaning vehicle 1 in which a state where the yaw rate of the leaning vehicle 1 is a predetermined value or more continues for a given time or more. In other words, if the above condition is not satisfied, the turning motion determiner 22 does not determine that the leaning vehicle 1 has performed turning motion.

During left turning in which the vehicle body 2 leans leftward or right turning in which the vehicle body 2 leans rightward by a rider's operation of the operation input device 60, physical quantity data is stored in the memory 51. The turning motion determiner 22 reads physical quantity data stored in the memory 51, and determines turning motion of the leaning vehicle 1 by using the physical quantity data.

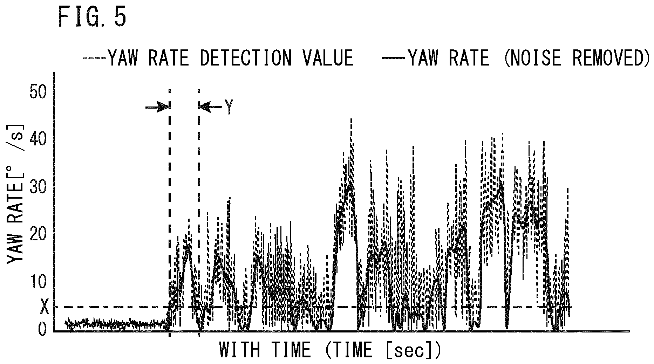

FIG. 5 is a view for describing turning motion determination performed by the turning motion determiner 22. The turning motion determiner 22 determines a turning motion section Y from an absolute value of a yaw-rate-detection value output from the gyro sensor 21a. Specifically, if a duration time of a section from when the absolute value of the yaw-rate-detection value of the leaning vehicle 1 exceeds a threshold X to when the absolute value decreases below the threshold X for the first time is a minimum duration time $Y_{min}$ or more, the turning motion determiner 22 determines that the section is a turning motion section. That is, the turning motion determiner 22 determines a single corner on which the leaning vehicle 1 turns while leaning to perform yaw motion continuously in the same direction, by using the yaw-rate-detection value of the leaning vehicle 1.

The yaw-rate-detection value output from the gyro sensor 21a includes measurement noise. The turning motion determiner 22 can remove noise from a high-frequency-band component by performing low-pass filtering on the yaw-rate-detection value. The low-pass filter has a frequency threshold of about 2 to 10 (Hz), for example. In FIG. 5, broken lines indicate yaw-rate-detection values detected by the gyro sensor 21a. In FIG. 5, solid lines indicate yaw rates from which noise is removed by a low-pass filter.

If a section Y in which the yaw-rate-detection value of the leaning vehicle 1 exceeds the threshold X does not reach the minimum duration time $Y_{min}$, the turning motion determiner 22 does not determine that the section Y is a turning motion section. The minimum duration time $Y_{min}$ is set as appropriate. The threshold X is set as appropriate depending on the vehicle type of the leaning vehicle 1.

In this embodiment, the method for determining a turning motion section using a yaw rate has been described, but the turning motion section Y may be determined by using a yaw angle. In the case of determining the turning motion section Y by using the yaw angle, after data of a yaw angle is converted to yaw rate data by, for example, time derivative, a turning motion section can be determined as described above.

A turning motion section can be determined by performing a computation process based on a yaw rate that is physical quantity data concerning yaw motion. Thus, by performing a computation process based on a yaw rate as described above, an increase in load of data processing in the leaning-vehicle-traveling-state-data-output device 20a can be suppressed, as compared to the case of determining a turning motion section using a roll rate or data obtained by a GPS.

When the turning motion determiner 22 determines a turning motion section, physical quantity data stored in the memory 51 in the turning motion section is input to the component separator 53. The component separator 53 performs a frequency characteristic separation process. The component separator 53 performs low-pass filtering on vehicle-traveling-state data to thereby separate a low-frequency-band component, and performs band-pass filtering to thereby separate a high-frequency-band component.

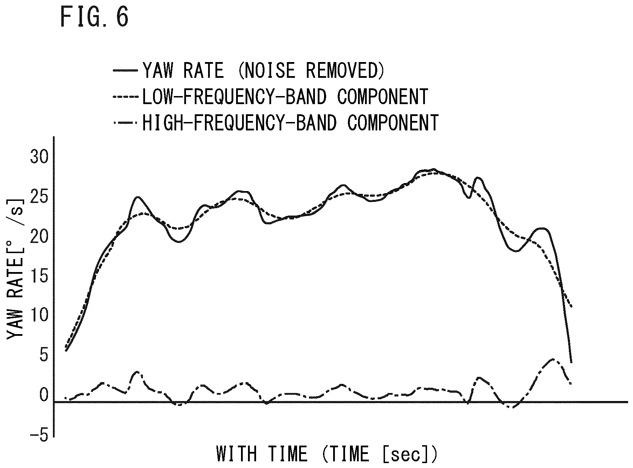

A component separation of each detection value will be described with reference to FIG. 6. FIG. 6 is a graph for describing component separation of vehicle-traveling-state data. Examples of data for which component separation can be performed by the component separator 53 include a yaw rate, a yaw angle, a roll rate, a roll angle, a pitch rate, and a pitch angle. In this embodiment, component separation by filtering will be described using a yaw rate as an example. In FIG. 6, the solid line indicates a yaw rate subjected to noise removal. In FIG. 6, the dotted line represents a low-frequency-band component subjected to component separation, and the chain line indicates a high-frequency-band component subjected to component separation.

The component separator 53 removes measurement noise from full-frequency-band-component data of an input yaw rate. The component separator 53 then performs low-pass filtering and band-pass filtering on the full-frequency-band component of the yaw rate from which noise is removed.

The low-pass filter removes a high-frequency-band component higher than a threshold frequency Fc1 that is a predetermined value. Accordingly, a low-frequency-band component is output from the low-pass filter.

A band-pass filter removes a low-frequency-band component of the threshold frequency Fc1 or less, and removes a noise component of a threshold frequency Fc2 or more.

<Section Division>

A yaw rate subjected to component separation by the component separator 53 is input to the section divider 23. The section divider 23 acquires a yaw rate subjected to component separation in a turning motion section, that is, a period determined to be a corner, by the turning motion determiner 22, and based on the yaw rate, divides the corner into a plurality of sections. In this embodiment, the section divider 23 divides the corner determined by the turning motion determiner 22 into three sections of the entry section, the turning section, and the rising section. The section divider 23 divides the corner into a plurality of sections such that an entry portion in which the leaning vehicle 1 performs an operation of entering the corner and a rising portion in which the leaning vehicle 1 performs an operation of rising after turning are not included in the same section.

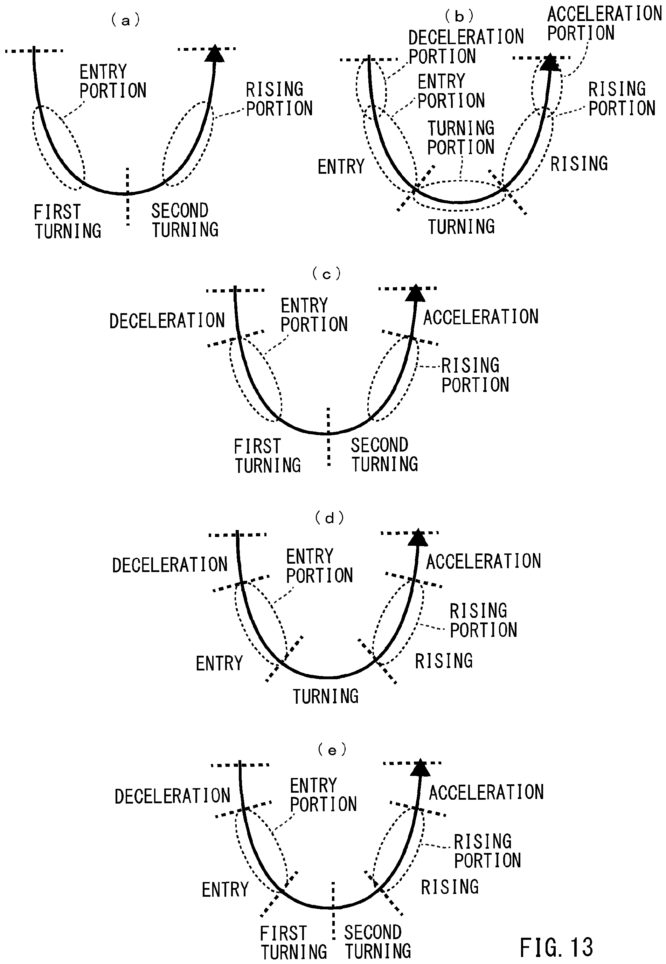

The corner includes portions (deceleration portion, entry portion, turning portion, rising portion, and acceleration portion) obtained by dividing based on a behavior of the leaning vehicle 1. Each of the portions indicates a state of the vehicle in the corner. An example of each portion in the corner is indicated by broken lines in FIG. 13(b). As illustrated in FIG. 13(b), adjacent portions at least partially overlap each other. The portions may not overlap each other.

The deceleration portion is mainly a portion in which the front wheel brake 13 and the rear wheel brake 17 are actuated so that the leaning vehicle 1 decelerates. The entry portion is mainly a portion in which the vehicle body 2 of the leaning vehicle 1 leans in the left direction or in the right direction and toward a turning center with the front wheel brake 13 and the rear wheel brake 17 being loosened. The turning portion is mainly a portion in which the leaning vehicle 1 turns with a steering angle, and a leaning angle and a vehicle speed of the vehicle body 2 being controlled. The rising portion is mainly a portion in which the vehicle body 2 gradually rises in the left direction or in the right direction. The acceleration portion is mainly a portion in which the leaning vehicle 1 accelerates.

The entry section mainly includes the deceleration portion and the entry portion. The turning section mainly includes the turning portion. The rising section mainly includes the rising portion and the acceleration portion.

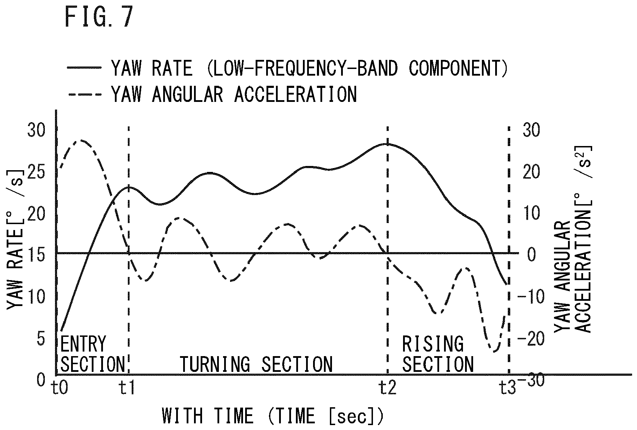

An operation of the section divider 23 will be described with reference to FIG. 7. FIG. 7 is a graph for describing an example of a section dividing process of a corner by the section divider 23, and chronologically shows a low-frequency-band component of a yaw rate and a yaw angular acceleration.

The section divider 23 calculates a yaw angular acceleration from the low-frequency-band component subjected to component separation by the component separator 53. Specifically, the section divider 23 performs time derivative on the low-frequency-band component of the yaw rate to thereby calculate yaw-angular-acceleration data. The section divider 23 divides a section determined to be a turning motion section (corner) by the turning motion determiner 22 into a plurality of sections, by using the low-frequency-band component of the yaw rate and the calculated yaw angular acceleration.

In this embodiment, as shown in FIG. 7, the section divider 23 defines, as an entry section, a section from a corner-section-determination-start point (t0) to a point at which the yaw angular acceleration crosses a zero value for the first time, that is, a section (t1) before zero crossing.

The section divider 23 defines, as a rising section, a section from a point at which the yaw angular acceleration crosses a zero value for the first time before the corner-section-determination-end point (t3), that is, from the point (t2) of first zero crossing before the corner-section-determination-end point (t3), to the corner-section-determination-end point (t3).

The section divider 23 defines a section from the entry-section-end point (t1) to the rising-section-start point (t2), as the turning section. In other words, the section divider 23 determines that a section from a point at which the yaw angular acceleration reaches zero crossing for the first time to a point at which the yaw angular acceleration reaches zero crossing lastly in a corner is the turning section.

In this embodiment, the section divider 23 performs a computation process based on physical quantity data concerning the yaw motion, and determines a point of zero crossing of the yaw angular acceleration to thereby specify the entry section, the turning section, and the rising section. Thus, it is possible to suppress an increase in load of data processing in the leaning-vehicle-traveling-state-data-output device 20a.

<Generation of Vehicle-traveling-state Data>

The vehicle-traveling-state-data generator 24 receives a low-frequency-band component and a high-frequency-band component subjected to component separation by the component separator 53. The vehicle-traveling-state-data generator 24 receives time data corresponding to section division from the section divider 23.

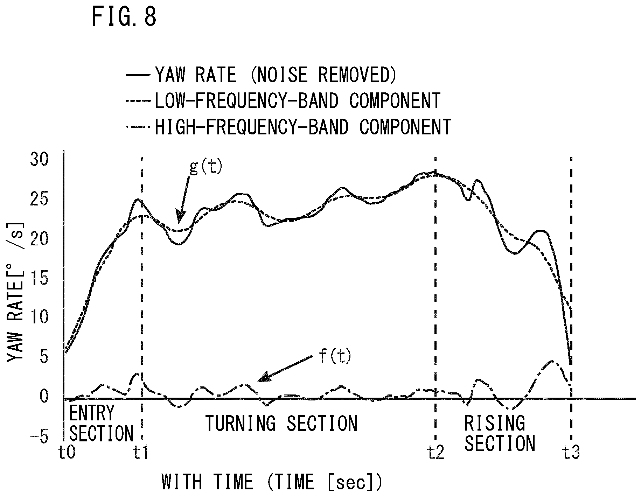

As in an example shown in FIG. 8, the vehicle-traveling-state-data generator 24 generates vehicle-traveling-state data including a low-frequency-band component (g(t)) and a high-frequency-band component (f(t)) depending on a time corresponding to each of the sections (i.e., the entry section, the turning section, and the rising section in this embodiment) in a corner, and outputs the vehicle-traveling-state data to the vehicle-traveling-state-data-output controller 25.

The vehicle-traveling-state-data-output controller 25 outputs the low-frequency-band component (g(t)) and the high-frequency-band component (f(t)) corresponding to each of the entry section, the turning section, and the rising section to the driving skill determiner 26.

<Driving Skill Determination>

The driving skill determiner 26 performs driving skill evaluation for each section based on the vehicle-traveling-state data corresponding to each of the entry section, the turning section, and the rising section, and generates driving-skill-determination data concerning the driving skill evaluation. The driving skill determiner 26 outputs the driving-skill-determination data to the driving-skill-determination-data-output controller 27.

In this embodiment, the driving skill evaluation means skill determination conducted based on smooth motion of the leaning vehicle 1. In the driving skill evaluation, if actual turning motion of the leaning vehicle 1 corresponds to turning motion expected based on an intention of a rider, it is determined that the driving skill is high. In this embodiment, the driving skill determiner 26 calculates a yaw determination index based on a yaw rate acquired for each section of a corner, and performs driving skill evaluation by using the calculated yaw determination index. An evaluation criterion for use in this driving skill evaluation can be a criterion created based on traveling data of a plurality of riders having various levels of driving skills, for example. The evaluation criterion may be a criterion created based on past traveling data of individuals.

The yaw determination index is a score of smooth motion. The degree of smooth motion is calculated from a ratio of a score of smooth motion as the yaw determination index and an evaluation criterion of smooth motion.

An operation of the driving skill determiner 26 will now be described.

The driving skill determiner 26 calculates a yaw determination index in the turning section of a corner obtained by division of the section divider 23. It can be assumed that the low-frequency-band component (g(t) in FIG. 8) of the yaw rate separated by the component separator 53 can be assumed as an expected action component when the leaning vehicle 1 turns on the corner. The high-frequency-band component (f(t) in FIG. 8) of the yaw rate separated by the component separator 53 can be assumed as a corrected action component operated by a rider for correcting turning motion when the vehicle cannot turn as expected by the rider.

From Equations (1) through (3) below, the driving skill determiner 26 obtains a ratio of an integral value of an absolute value of the expected action component of the yaw rate and an integral value of an absolute value of the corrected action component of the yaw rate for each of the entry section, the turning section, and the rising section, and the ratio is used as a yaw determination index (P1, P2, P3) in each section.

[Equation 1]

$$P1 = \frac{\int_{t0}^{t1} |g(t)| dt}{\int_{t0}^{t1} |f(t)| dt} \quad \cdots (1)$$

[Equation 2]

$$P2 = \frac{\int_{t1}^{t2} |g(t)| dt}{\int_{t1}^{t2} |f(t)| dt} \quad \cdots (2)$$

[Equation 3]

$$P3 = \frac{\int_{t2}^{t3} |g(t)| dt}{\int_{t2}^{t3} |f(t)| dt} \quad \cdots (3)$$

In a case where a rider performs smooth operation on the leaning vehicle 1 while the leaning vehicle 1 travels on a corner, the integral amount of the absolute value of the low-frequency-band component g(t) is large. On the other hand, in this case, the integral amount of the absolute value of the high-frequency-band component f(t) is small. In a case where the rider performs a detailed and abrupt correction operation on the leaning vehicle 1 while the leaning vehicle 1 travels on a corner, the integral amount of the absolute value of the high-frequency-band component f(t) is large. On the other hand, in this case, the integral amount of the absolute value of the low-frequency-band component g(t) is small. In this manner, by using a ratio of the integral amount of the absolute value of the low-frequency-band component g(t) and the integral amount of the absolute value of the high-frequency-band component f(t) as an index, characteristics of smooth motion of the rider during traveling of the leaning vehicle 1 on a corner can be determined as a score.

In this embodiment, the frequency threshold of the expected action component and the frequency threshold of the corrected action component are the same value in each section of a corner divided by the section divider 23. Alternatively, the frequency threshold of the expected action component and the frequency threshold of the corrected action component may differ among sections of the corner divided by the section divider 23. In this case, the component separator 53 performs low-pass filtering and high-pass filtering with which different frequency thresholds are set among sections divided by the section divider 23, on a yaw rate from which noise is removed. The driving skill determiner 26 calculates a yaw determination index by applying Equations (1) through (3) to the expected action component and the corrected action component obtained by the component separator 53.

Next, the driving skill determiner 26 determines the degree of smooth motion during traveling of the leaning vehicle 1 for each section of the corner divided by the section divider 23 by using the calculated yaw determination index and evaluation criterion.

Each of the yaw determination index P1 of the entry section, the yaw determination index P2 of the turning section, and the yaw determination index P3 of the rising section is a continuous value. Thus, the driving skill determiner 26 can determine the degree of smooth motion in traveling in a stepless manner for each section by using these yaw determination indexes P1 through P3. It is shown that as the yaw determination index decreases, the corrected action component increases relative to the expected action component. Accordingly, if the yaw determination index is low, the driving skill determiner 26 determines that smooth motion in traveling is low.

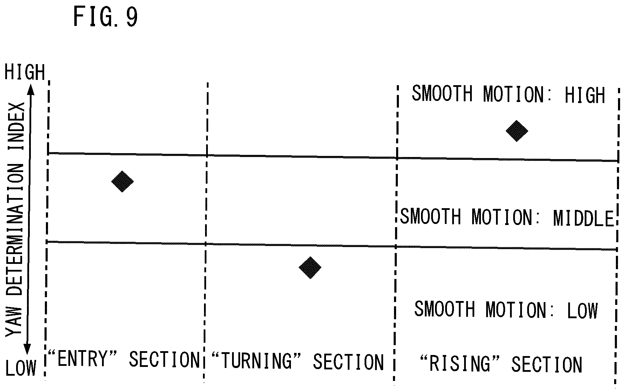

As shown in FIG. 9, the driving skill determiner 26 evaluates the indexes P1 through P3 stepwise using a threshold corresponding to an evaluation criterion to thereby determine smooth motion during traveling stepwise. FIG. 9 shows an example in which the degree of smooth motion is determined in three steps using the same threshold in each section of a corner.

The example of FIG. 9 shows that the degree of smooth motion during traveling increases in the order of the rising section, the entry section, and the turning section. The threshold for determining the degree of smooth motion may be changed for each section of the corner.

The driving skill determiner 26 outputs driving-skill-determination data that is determination data concerning smooth motion generated in each of the entry section, the turning section, and the rising section, to the driving-skill-determination-data-output controller 27.

The driving-skill-determination-data-output controller 27 outputs the driving-skill-determination data to the output device 15 and presents the data to a rider of the leaning vehicle 1.

The presentation to the rider by the driving-skill-determination-data-output controller 27 may be performed after each turning motion of the leaning vehicle 1, after a plurality of turning motions of the leaning vehicle 1, or after traveling of the leaning vehicle 1. The driving-skill-determination-data-output controller 27 may present all the determination results in each section of the corner to the rider or may present only a specific determination result to the rider.

For example, in the example shown in FIG. 9, since the degree of smooth motion of turning is determined to be "low," the driving-skill-determination-data-output controller 27 may be configured to present only a determination result of the turning section to the rider. This presentation enables the rider to clearly obtain a traveling scene that needs to be improved, so that a driving skill of the rider can be efficiently enhanced.

The driving-skill-determination-data-output controller 27 can compare results determined for the sections of the corner by the driving skill determiner 26 as shown in FIG. 9, and output the results. That is, the driving-skill-determination-data-output controller 27 may output the driving-skill-determination data in the section of the corner in a format enabling intercomparison. This enables comparison of driving-skill-determination data output in the sections of the corner. Accordingly, a difference in driving-skill-determination data among the sections of the corner can be more reliably obtained.

The vehicle-traveling-state-data-output controller 25 of the leaning-vehicle-traveling-state-data-output device 20a may compare and output vehicle-traveling-state data generated for the sections of the corner by the vehicle-traveling-state-data generator 24 in the same manner as in FIG. 9. That is, the vehicle-traveling-state-data-output controller 25 may output vehicle-traveling-state data in the sections of the corner in a formant enabling intercomparison. This enables comparison of vehicle-traveling-state data output in the sections of the corner. Accordingly, a difference in vehicle-traveling-state data among the sections of the corner can be more reliably obtained.

The output device 15 for presentation to a rider is configured to perform presentation by the sense of sight (e.g., display on the monitor 15a), presentation by the sense of hearing (i.e., presentation by voice from the speaker 15b in the helmet 16), presentation by the sense of touch (e.g., presentation by the vibrator 15c disposed in the front seat 7a). The method for presentation to a rider may be other methods, and is not limited to the methods described above.

As described above, the leaning-vehicle-driving-skill-determination apparatus 20 can obtain vehicle-traveling-state data in each section of a corner divided by the section divider 23, and perform driving skill evaluation in each section of the corner. Accordingly, a driving skill of a rider can be evaluated in more detail.

<Control Operation of Corner-section-dividing Process>

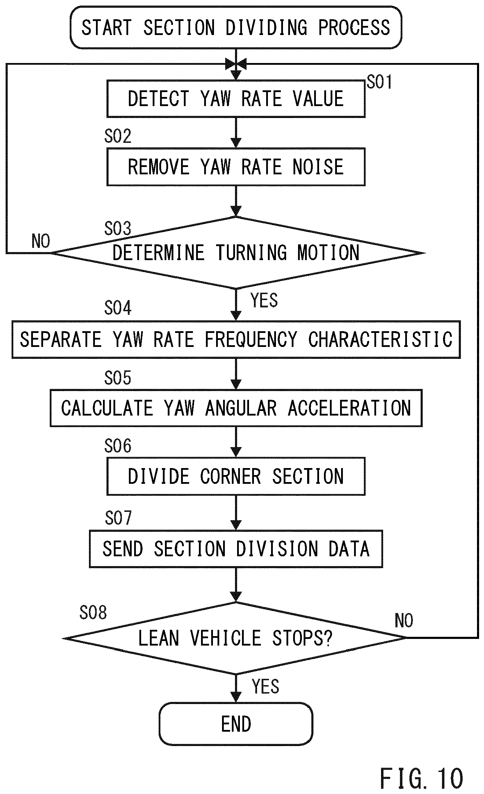

Referring now to FIG. 10, a control operation of a corner-section-dividing process by the leaning-vehicle-traveling-state-data-output device 20a will be described.

FIG. 10 is a flowchart depicting the corner-section-dividing process operation.

During traveling of the leaning vehicle 1, the turning motion determiner 22 acquires a yaw rate of the leaning vehicle 1 acquired by the physical-quantity-data acquirer 21 (step S01). Next, the turning motion determiner 22 removes measurement noise from the acquired yaw rate (step S02). The turning motion determiner 22 determines whether or not the leaning vehicle 1 has performed turning motion (step S03). If the turning motion determiner 22 determines that the leaning vehicle 1 has not performed turning motion (No in step S03), the turning motion determiner 22 acquires a yaw rate of the leaning vehicle 1 again (step S01).

If the turning motion determiner 22 determines that the leaning vehicle 1 has performed turning motion (Yes in step S03), the component separator 53 reads the yaw rate from the memory 51. Then, the component separator 53 performs filtering on the yaw rate that has been read to thereby separate the yaw rate for each frequency characteristic (step S04). That is, the yaw rate that is physical quantity data input to the component separator 53 is separated into a low-frequency-band component and a high-frequency-band component through low-pass filtering and band-pass filtering.

Subsequently, the section divider 23 calculates a yaw angular acceleration from the low-frequency-band component of the yaw rate separated for each frequency characteristic (step S05). Specifically, the section divider 23 performs time derivative on a frequency band component of the yaw rate to thereby calculate yaw-angular-acceleration data.

Thereafter, the section divider 23 divides a corner into a plurality of sections by using the low-frequency-band component of the yaw rate and the calculated yaw angular acceleration (step S06). As described above, in this embodiment, the section divider 23 defines a section from the corner-section-determination-start point (t0) to the point (t1) at which the yaw angular acceleration reaches zero crossing for the first time, as the entry section. The section divider 23 defines a section from the point (t2) at which the yaw angular acceleration reaches zero crossing for the first time before the corner-section-determination-end point (t3), to the corner-section-determination-end point (t3), as the rising section. The section divider 23 defines a section from the entry-section-end point (t1) to the rising-section-start point (t2), as the turning section. Here, the point of zero crossing is a moment at which the yaw angular acceleration crosses a zero value, that is a predetermined time range including a moment at which the yaw angular acceleration is switched between positive and negative. The predetermined time range is determined with reference to the moment at which the yaw angular acceleration is switched between positive and negative.

When division of one corner is finished, the section divider 23 sends section division data of the corner to the vehicle-traveling-state-data generator 24 (step S07). Then, the controller 200 determines whether or not the leaning vehicle 1 has stopped (step S08). If it is determined that the leaning vehicle 1 has stopped (Yes in step S08), the controller 200 finishes an operation.

If it is determined that the leaning vehicle 1 has not stopped (No in step S08), the process returns to step S01, and the controller 200 performs a section-dividing-process operation of a next corner.

<Control Operation of Driving-skill-determination Process>

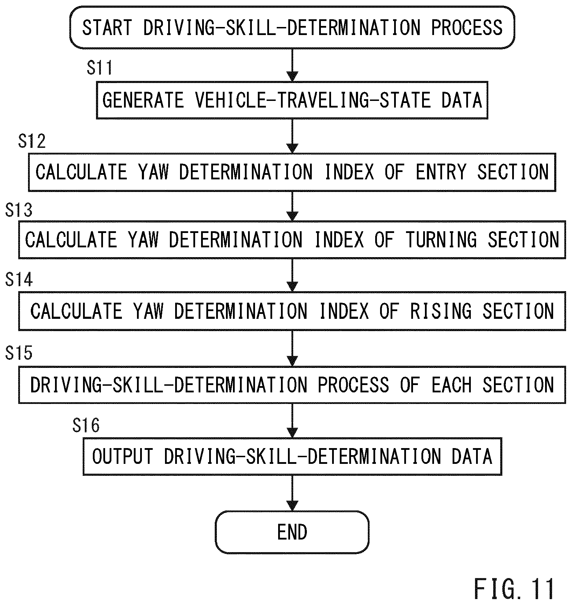

Referring now to FIG. 11, a control operation of a driving-skill-determination process by the leaning-vehicle-driving-skill-determination apparatus 20 will be described. FIG. 11 is a flowchart depicting the control operation of the driving-skill-determination process.

The vehicle-traveling-state-data generator 24 generates vehicle-traveling-state data for each section. In this embodiment, the vehicle-traveling-state-data generator 24 generates a low-frequency-band component g(t) and a high-frequency-band component f(t) of a yaw rate corresponding to each of the entry section, the turning section, and the rising section (step S11). The generated vehicle-traveling-state data is output from the vehicle-traveling-state-data-output controller 25 to the driving skill determiner 26.

Then, the driving skill determiner 26 obtains a ratio of an integral value of an absolute value of the expected action component of the yaw rate in the entry section and an integral value of an absolute value of the corrected action component, and from the ratio, a yaw determination index (P1) of the entry section is calculated (step S12).

Thereafter, the driving skill determiner 26 obtains a ratio of an integral value of an absolute value of the expected action component of the yaw rate in the turning section and an integral value of an absolute value of the corrected action component, and from the ratio, a yaw determination index (P2) of the turning section is calculated (step S13).

Subsequently, the driving skill determiner 26 obtains a ratio of an integral value of an absolute value of the expected action component of the yaw rate in the rising section and an integral value of an absolute value of the corrected action component, and from the ratio, a yaw determination index (P3) of the rising section is calculated (step S14).

Then, the driving skill determiner 26 determines the degree of smooth motion during traveling of the leaning vehicle 1 for each section of a corner, by using the yaw determination index calculated for each section of the corner (step S15). In this embodiment, the driving skill determiner 26 compares a yaw determination index with a threshold corresponding to an evaluation criterion to thereby determine the degree of smooth motion during traveling of the leaning vehicle 1 stepwise. From the determination result, the driving skill determiner 26 generates determination data concerning the degree of smooth motion during traveling of the leaning vehicle 1.

Next, the driving skill determiner 26 outputs the determination data concerning the degree of smooth generated by determination for each of the entry section, the turning section, and the rising section, to the driving-skill-determination-data-output controller 27.

The driving-skill-determination-data-output controller 27 outputs determination data concerning the degree of smooth motion to the output device 15, and presents the data to a rider of the leaning vehicle 1 (step S16). Thereafter, a driving-skill-determination-process operation is finished.

In the configuration of this embodiment, the physical-quantity-data acquirer 21 acquires physical quantity data concerning a behavior of the leaning vehicle 1 in each section obtained by dividing a corner on which the leaning vehicle 1 travels into a plurality of sections. Based on the physical quantity data concerning a behavior of the leaning vehicle 1, the vehicle-traveling-state-data generator 24 generates vehicle-traveling-state data of the leaning vehicle 1 in each section of the corner.

In each section of the corner, the vehicle traveling state of the leaning vehicle 1 changes. In each of the sections obtained by dividing the single corner on which the leaning vehicle 1 turns while leaning to perform yaw motion continuously in the same direction, into a plurality of sections, vehicle-traveling-state data of the leaning vehicle 1 is generated based on physical quantity data concerning a behavior of the leaning vehicle 1 as described above, so that accuracy of the vehicle-traveling-state data can be increased without enhancing resolution of the vehicle-traveling-state data.

Thus, it is possible to obtain the leaning-vehicle-traveling-state-data-output device 20a capable of increasing accuracy of vehicle-traveling-state data of the leaning vehicle 1 while suppressing an increase in load of a hardware resource.

In addition, the leaning-vehicle-driving-skill-determination apparatus 20 according to this embodiment can perform driving skill evaluation in each section of a corner by obtaining vehicle-traveling-state data based on a vehicle traveling state of the leaning vehicle 1 in each section of the corner. Accordingly, a driving skill of a rider can be evaluated in more detail.

The leaning-vehicle-traveling-state-data-output device 20a according to this embodiment includes the section divider 23 that calculates a corner on which the leaning vehicle 1 turns based on physical quantity data acquired by the physical-quantity-data acquirer 21 and divides the calculated corner into a plurality of corners.

Accordingly, the corner on which the leaning vehicle 1 travels can be divided into a plurality of sections. Thus, it is possible to obtain an apparatus capable of outputting vehicle-traveling-state data corresponding to each of sections obtained by dividing a corner and having high accuracy enough to be used for, for example, driving skill evaluation.

In addition, in this embodiment, the section divider 23 obtains a yaw rate and a yaw angular acceleration based on physical quantity data concerning yaw motion acquired by the physical-quantity-data acquirer 21, and determines a section of a corner from a corner-section-determination-start point at which the yaw rate is a threshold or more to a point at which the yaw angular acceleration reaches zero crossing, as the corner entry section.

As described above, the section divider 23 performs a computation process based on physical quantity data concerning yaw motion to thereby specify an entry section easily. This makes it possible to suppress an increase in load of data processing in the leaning-vehicle-traveling-state-data-output device 20a.

In this embodiment, the section divider 23 obtains a yaw rate and a yaw angular acceleration based on physical quantity data concerning yaw motion acquired by the physical-quantity-data acquirer 21, and determines a section of the corner from a last point at which the yaw angular acceleration reaches zero crossing before a corner-section-determination-end point at which the yaw rate becomes less than the threshold, to the corner-section-determination-end point, as a rising section.

As described above, the section divider 23 performs a computation process based on physical quantity data concerning yaw motion to thereby specify a rising section. This makes it possible to suppress an increase in load of data processing in the leaning-vehicle-traveling-state-data-output device 20a.

In this embodiment, the section divider 23 obtains a yaw rate and a yaw angular acceleration based on physical quantity data concerning yaw motion acquired by the physical-quantity-data acquirer 21, and determines a section of a corner from a point at which the yaw angular acceleration reaches zero crossing for the first time to a last point at which the yaw angular acceleration reaches zero crossing, as the turning section.

As described above, the section divider 23 performs a computation process based on physical quantity data concerning yaw motion to thereby specify a turning section. This makes it possible to suppress an increase in load of data processing in the leaning-vehicle-traveling-state-data-output device 20a.

(Other Embodiments)

In the embodiment described above, as corner section division, the section divider 23 divides a corner into a plurality of sections by using physical quantity data concerning yaw motion. Alternatively, the section divider may divide a corner into a plurality of sections by using physical quantity data concerning roll motion or physical quantity data concerning pitch motion. In such cases, it is sufficient that the section divider divides the corner into a plurality of sections by performing a process similar to the case of using physical quantity data concerning yaw motion.

The section divider may divide a corner into a plurality of sections based on distance. Specifically, the section divider may divide the corner into a plurality of sections depending on a travel distance in which the leaning vehicle turns on the corner. A reference distance used in dividing a corner into a plurality of sections may be obtained by previously measuring a distance in which the leaning vehicle actually travels on the corner or may be obtained by calculation.

The section divider may divide a corner into a plurality of sections based on time. Specifically, the section divider may divide the corner into a plurality of sections depending on an elapsed time in which the leaning vehicle turns on the corner. A reference time used in dividing a corner into a plurality of sections may be obtained by previously measuring a time in which the leaning vehicle actually travels on the corner or may be obtained by calculation.

The section divider may divide the corner into a plurality of sections by using a trajectory in which the leaning vehicle travels on the corner. The section divider may measure an actual trajectory in which the leaning vehicle travels on the corner with, for example, a sensor or a GPS and divide the measured trajectory into a plurality of sections. The section divider may divide the corner on which the leaning vehicle travels into a plurality of sections based on, for example, map information.

In the embodiment described above, a driving skill of a rider is evaluated based on smooth motion during traveling of the leaning vehicle 1. The driving skill of the rider may be evaluated using other evaluation items. For example, the driving skill of the rider may be evaluated based on quick motion of the leaning vehicle. The quick motion herein is motion in a case where actual turning motion of the leaning vehicle correspond to turning motion expected based on an intention of a rider in order to obtain a turning force of the rider while the leaning vehicle turns on a corner. For example, the driving skill of the rider may be evaluated by using the degree of smooth motion during traveling of the leaning vehicle and the degree of quick motion of the leaning vehicle. By evaluating smooth motion and quick motion in this manner, it is possible to easily obtain how to improve a driving skill of the rider for smooth motion and a driving skill of the rider for quick motion. Accordingly, it is clear for the rider how to improve driving so that a driving skill of the rider can be easily enhanced.

The degree of quick motion can be calculated by using a low-frequency-band component of a detection angle of at least one of a roll angle or a pitch angle. For example, the driving skill determiner 26 calculates a roll determination index based on the low-frequency-band component of a roll angle acquired for each section of a corner, and evaluates the calculated roll determination index to thereby determine a driving skill of a rider. An evaluation criterion used for evaluation of a roll determination index may be a criterion created based on traveling data of a plurality of riders having various levels of driving skills.

The roll determination index is a score of quick motion. The degree of quick motion is calculated from a ratio of a score of quick motion that is a roll determination index to an evaluation criterion of quick motion.

A case will now be described where the leaning-vehicle-driving-skill-determination apparatus 20 evaluates a driving skill of a rider based on quick motion of the leaning vehicle.

To use a roll angle, the component separator 53 reads a roll angle chronologically stored in the memory 51 and performs component separation thereon.

The low-frequency-band component g(t) is interpreted as an expected action component in which the leaning vehicle turns on a corner. To obtain a turning force of the leaning vehicle while the leaning vehicle turns on a corner, when a rider operates the handlebar smoothly based on a turning operation expected based on an intention of the rider, the absolute value of the low-frequency-band component g(t) increases. Thus, by using the absolute value of the expected action component of the roll angle as an index as described above, an operation characteristic concerning quick motion of a rider can be determined as a score.

The driving skill determiner 26 calculates a roll determination index in each section of a corner.

The driving skill determiner 26 obtains an integral value of an absolute value of an expected action component of a roll angle in each of the entry section, the turning section, and the rising section from Equations (4) through (6), and the integral value is used as a roll determination index (T1, T2, T3) in each section.

[Equation 4]

$$T1 = \int_{t0}^{t1} |g(t)| dt \quad \cdots (4)$$

[Equation 5]

$$T2 = \int_{t1}^{t2} |g(t)| dt \quad \cdots (5)$$

[Equation 6]

$$T3 = \int_{t2}^{t3} |g(t)| dt \quad \cdots (6)$$

The driving skill determiner 26 determines the degree of quick motion during traveling of the leaning vehicle for each section of a corner, by using the calculated roll determination index and evaluation criterion.

Each of the roll determination index T1 of the entry section, the roll determination index T2 of the turning section, and the roll determination index of the rising section is a continuous value. Thus, the driving skill determiner 26 can determine the degree of quick motion during traveling in a stepless manner for each section of the corner, by using the roll determination indexes T1 through T3. The driving skill determiner 26 can determine that as the value of the roll determination index increases, the vehicle more follows turning motion expected by a rider. Accordingly, the driving skill determiner 26 determines that if the roll determination index is high, the degree of quick motion during traveling of the leaning vehicle is high.

Although the degree of quick motion of the leaning vehicle is calculated by using a roll angle, the angles degree of quick motion may be calculated by using other traveling state data. For example, the degree of quick motion of the leaning vehicle may be calculated by using a pitch angle and a vehicle speed as well as the roll angle. In this case, the pitch angle and the vehicle speed are subjected to component separation, in the same manner as the roll angle. The driving skill determiner 26 obtains a pitch determination index that is an index of quick motion, from the pitch angle subjected to component separation, from Equations (4) through (6) above. Similarly, the driving skill determiner 26 obtains a speed index that is an index of quick motion, from the vehicle speed subjected to component separation, by using Equations (4) through (6) above.

Then, the driving skill determiner 26 obtains a weighting linear sum of a roll determination index, a pitch determination index, and a speed determination index, and uses the sum as an index of quick motion. In this manner, the driving skill determiner 26 uses a plurality of types of traveling state data to thereby present a more accurate driving-skill-determination result to a rider. The driving skill determiner 26 may calculate an index of quick motion by, for example, a sum of products or conditional probability, other than the weighting linear sum.

In the embodiment described above, the yaw rate is used as traveling state data for determining the degree of smooth motion of the leaning vehicle. As the traveling state data for determining smooth motion of the leaning vehicle, other traveling state data may be used in addition to the yaw rate. Examples of the other traveling state data include a roll rate and a pitch rate. In this case, the roll rate and the pitch rate are subjected to component separation, in a manner similar to the yaw rate. Then, the driving skill determiner 26 obtains a roll determination index that is an index of smooth motion from the roll rate subjected to component separation, by using Equation (1) through (3). Similarly, the driving skill determiner 26 obtains a pitch determination index from the pitch rate subjected to component separation, by using Equation (1) through (3).

The driving skill determiner 26 obtains the yaw determination index, the roll determination index, and the pitch determination index, and uses these indexes as indexes of smooth motion. In this manner, by using the plurality of types of traveling state data, a more accurate driving-skill-determination result can be presented to a rider. The driving skill determiner 26 may calculate an index of smooth motion by, for example, a sum of products or conditional probability, other than the weighting linear sum.

In the embodiment described above, the corner is divided into the three sections of the entry section, the turning section, and the rising section, but may be divided into two sections or four or more sections. For example, the corner may be divided into two sections of a first half and a second half. As a method for dividing the corner into the first half and the second half, the corner may be divided into the first half and the second half by using a peak value of a yaw rate as a boundary.

FIG. 13 schematically illustrates examples in each of which a corner is divided into a plurality of sections. In FIG. 13, the leaning vehicle 1 travels in a direction indicated by arrows.

As illustrated in FIG. 13(a), a corner may be divided into two sections of a turning first section and a turning second section. In such a case where a corner is divided into two sections, the turning first section includes a portion where the leaning vehicle 1 decelerates, and the turning second section includes a portion in which the leaning vehicle 1 accelerates. FIG. 13(b) is a view in which a corner is divided into three sections of an entry section, a turning section, and a rising section, as in the embodiment. As illustrated in FIG. 13(c), the corner may be divided into four sections of a deceleration section, a turning first section, a turning second section, and an acceleration section. As illustrated in FIG. 13(d), the corner may be divided into five sections of a deceleration section, an entry section, a turning section, a rising section, and an acceleration section. As illustrated in FIG. 13(e), the corner may be divided into six sections of a deceleration section, an entry section, a turning first section, a turning second section, a rising section, and an acceleration section.

In the examples shown in FIGS. 13(a) through 13(e), the corner is divided into a plurality of sections such that the entry portion in which the leaning vehicle 1 performs an operation of entering the corner and the rising portion in which the leaning vehicle 1 performs an operation of rising after turning are not included in the same section. In the examples of FIGS. 13(b), 13(d), and 13(e), at least one section is present between the section including the entry portion and the section including the rising portion in the corner.

As illustrated in FIGS. 13(b) and 13(d), the corner is not divided at a center of the turning section so that the turning section in which a change of the yaw rate is relatively small is not divided, and thus, a driving skill in the turning section, for example, can be easily evaluated by using the obtained vehicle-traveling-state data. As illustrated in FIGS. 13(a), 13(c), and 13(e), the entry portion and the rising portion can be reliably separated by another section by dividing the corner. Thus, a driving skill in the entry portion and the rising portion, for example, can be easily evaluated by using the obtained vehicle-traveling-state data.

The deceleration section is a section where the leaning vehicle 1 decelerates at a timing earlier than that in the entry portion. In the deceleration section, a behavior of the leaning vehicle 1 is easily affected by braking. A behavior of the leaning vehicle 1 appears mainly in data of acceleration and deceleration in the traveling direction and a pitch rate, for example. In the entry section, a behavior of the leaning vehicle 1 mainly appears in a roll rate of the leaning vehicle 1 and an acceleration in the left direction or in the right direction. In the rising section, a behavior of the leaning vehicle 1 mainly appears in a roll rate and an acceleration in the traveling direction. The acceleration section is a section where the leaning vehicle 1 accelerates at a timing later than the rising portion. In the acceleration section, a behavior of the leaning vehicle 1 mainly appears in data of acceleration and deceleration in the traveling direction and a pitch rate, for example.

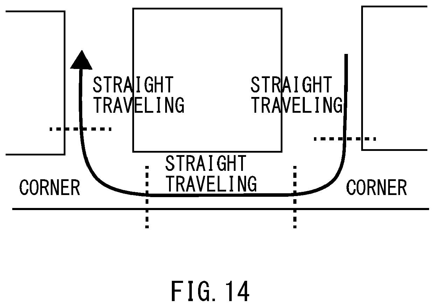

FIG. 14 illustrates an example in which the leaning vehicle 1 turns twice. In FIG. 14, the traveling direction of the leaning vehicle 1 is indicated by the arrow. In the example illustrated in FIG. 14, a travel route of the leaning vehicle includes two corners and a straight-traveling region between the corners. In this case, the leaning-vehicle-traveling-state-data-output device 20a according to the embodiment described above divides each corner into a plurality of sections, and outputs vehicle-traveling-state data of the leaning vehicle 1 in each section. As described above, a travel route including a straight-traveling region between corners is not a single corner on which the leaning vehicle 1 turns while leaning to perform yaw motion continuously in the same direction. That is, the example of the travel route illustrated in FIG. 14 is significantly different from the corner illustrated in FIG. 13.

In the embodiment described above, the leaning-vehicle-driving-skill-determination apparatus 20 includes the leaning-vehicle-traveling-state-data-output device 20a. However, the leaning-vehicle-traveling-state-data-output device may be an apparatus different from the leaning-vehicle-driving-skill-determination apparatus. In this case, the leaning-vehicle-traveling-state-data-output device may be a leaning-vehicle-data-output apparatus. Alternatively, an apparatus including the leaning-vehicle-traveling-state-data-output device may be the leaning-vehicle-data-output apparatus.

In the embodiment described above, the leaning-vehicle-traveling-state-data-output device 20a outputs vehicle-traveling-state data of the leaning vehicle 1 to the leaning-vehicle-driving-skill-determination apparatus 20. The leaning-vehicle-driving-skill-determination apparatus 20 determines a driving skill of a rider of the leaning vehicle 1 in each section of a corner by using the vehicle-traveling-state data, and outputs a result of the determination. Alternatively, the leaning-vehicle-traveling-state-data-output device may output the vehicle-traveling-state data to the driving evaluation device or the driving assistance device. In this case, the driving evaluation device or the driving assistance device may be the leaning-vehicle-data-output apparatus.

The driving evaluation device may be a driving evaluation device for evaluating a driving skill of a rider, for example. The driving assistance device may be a driving assistance device for training and instructing a rider or a driving assistance device for setting (adjusting) a control device of a leaning vehicle. The leaning-vehicle-traveling-state-data-output device may be disposed in the driving evaluation device or the driving assistance device.

The leaning-vehicle-traveling-state-data-output device may output leaning-vehicle-traveling-state data to a device other than the driving evaluation device or the driving assistance device. The device that has received the leaning-vehicle-traveling-state data may generate and output indexed data other than a driving skill. The indexed data includes a dimensionless index in which a dimensional index of length, a dimensional index of mass, a dimensional index of time, a dimensional index of current, a dimensional index of thermodynamic temperature, a dimensional index of substance amount, or a dimensional index of luminous intensity is zero. In this case, the device that has received the leaning-vehicle-traveling-state data may be a leaning-vehicle-data-output apparatus.

Output data of the driving evaluation device or output data of the leaning-vehicle-traveling-state-data-output device may be used for another device for evaluating credit, for example. The control device of the leaning vehicle may use the output data of the driving evaluation device or the output data of the leaning-vehicle-traveling-state-data-output device for controlling suspensions and responsiveness of accelerators, for example.

In the embodiment described above, the vehicle-traveling-state-data generator 24 generates vehicle-traveling-state data based on physical quantity data concerning a behavior of the leaning vehicle 1 in each section of a corner. The vehicle-traveling-state-data-output controller 25 outputs vehicle-traveling-state data of each section generated by the vehicle-traveling-state-data generator 24.

Alternatively, the vehicle-traveling-state-data generator may generate vehicle-traveling-state data based on the physical quantity data in the entire section of the corner, in addition to each section of the corner. The vehicle-traveling-state-data-output controller may output the vehicle-traveling-state data in the entire section of the corner generated by the vehicle-traveling-state-data generator together with the vehicle-traveling-state data in each section of the corner.

INDUSTRIAL APPLICABILITY

The present teaching is applicable to a leaning-vehicle-data-output apparatus that outputs vehicle-traveling-state data in each section obtained by dividing a corner into a plurality of sections.

DESCRIPTION OF REFERENCE CHARACTERS

1 leaning vehicle
2 vehicle body
3 front wheel
4 rear wheel
5 vehicle body cover
8 power unit
9 front fork
10 vehicle body frame
13 front wheel brake
15 output device
15a monitor
15b speaker
15c vibrator
16 helmet
17 rear wheel brake
20 leaning-vehicle-driving-skill-determination apparatus (leaning-vehicle-data-output apparatus)
20a leaning-vehicle-traveling-state-data-output device
21 physical-quantity-data acquirer
21a gyro sensor
21b acceleration sensor
22 turning motion determiner
23 section divider
24 vehicle-traveling-state-data generator
25 vehicle-traveling-state-data-output controller
26 driving skill determiner (indexed data generator)
27 driving-skill-determination-data-output controller (indexed-data-output controller)
51 memory
53 component separator
60 operation input device
60a accelerator grip
60b brake lever
60c brake pedal
60d foot step
60e handlebar
200 controller

**Claims**

1. A leaning-vehicle-data-output apparatus (20) comprising:

   a physical-quantity-data acquirer (21) configured to acquire physical quantity data concerning a behavior of a leaning vehicle (1) when the leaning vehicle (1) turns left on a corner while leaning leftward or turns right on the corner while leaning rightward, the leaning vehicle (1) including a vehicle body (2) and an operation input device (60), the vehicle body (2) being configured to lean leftward while turning to the left and lean rightward while turning to the right, the operation input device (60) being configured to be operated by a rider;

a vehicle-traveling-state-data generator (24) configured to generate vehicle-traveling-state data based on the acquired physical quantity data; and

a vehicle-traveling-state-data-output controller (25) configured to output the vehicle-traveling-state data, **characterized in that**

a single corner which comprises a deceleration portion, an entry portion, in which the leaning vehicle performs an operation of entering the corner, a turning portion, a rising portion, in which the leaning vehicle performs an operation of rising after turning, and an acceleration portion, and on which the leaning vehicle (1) turns while leaning to perform yaw motion continuously in an identical direction, is divided into a plurality of sections including a section including the deceleration portion in which the leaning vehicle (1) decelerates at a timing earlier than the entry portion,

the vehicle-traveling-state-data generator (24) is configured to generate vehicle-traveling-state data of the leaning vehicle (1) in each of the plurality of sections of the single corner based on the acquired physical quantity data, the physical quantity data being acquired by the physical-quantity-data acquirer (21) and concerning the behavior of the leaning vehicle (1) while the leaning vehicle (1) turns left on the corner while leaning leftward or turns right on the corner while leaning rightward, the plurality of sections including the section including the deceleration portion, and

the vehicle-traveling-state-data-output controller (25) is configured to output the vehicle-traveling-state data in each of the sections.

2.  The leaning-vehicle-data-output apparatus (20) according to claim 1, wherein
the corner is divided into the plurality of sections such that the entry portion and the rising portion are not included in an identical section.

3.  The leaning-vehicle-data-output apparatus (20) according to claim 2, wherein
the plurality of sections includes at least one section between an entry section including the entry portion and a rising section including the rising portion.

4.  The leaning-vehicle-data-output apparatus (20) according to any one of claims 1 to 3, further comprising:

an indexed data generator (26) configured to generate an indexed data in each of the sections of the corner based on the vehicle-traveling-state data of the leaning vehicle (1) in each of the sections of the corner; and
an indexed-data-output controller (27) configured to output the indexed data.

5.  The leaning-vehicle-data-output apparatus (20) according to any one of claims 1 to 4, wherein

the vehicle-traveling-state-data generator (24) is configured to generate the vehicle-traveling-state data based on the acquired physical quantity data in each of the sections, and to generate the vehicle-traveling-state data based on the acquired physical quantity data in an entire section of the corner, and
the vehicle-traveling-state-data-output controller (25) is configured to output the vehicle-traveling-state data in each of the sections, and outputs the vehicle-traveling-state data in the entire section of the corner.

6.  The leaning-vehicle-data-output apparatus (20) according to any one of claims 1 to 5, wherein
the vehicle-traveling-state-data-output controller (25) is configured to output the vehicle-traveling-state data in each of the sections of the corner in a format enabling intercomparison.

**Patentansprüche**

1.  Neigungsfahrzeug-Daten-Ausgabevorrichtung (20), die folgende Merkmale aufweist:

eine Physikalische-Größendaten-Erfassungseinrichtung (21) für, die dazu konfiguriert ist, physikalische Größendaten zu erfassen, die ein Verhalten eines Neigungsfahrzeugs (1) betreffen, wenn das Neigungsfahrzeug (1) eine Kurve nach links fährt, während es sich nach links neigt, oder eine Kurve nach rechts fährt, während es sich nach rechts neigt, wobei das Neigungsfahrzeug (1) einen Fahrzeugkörper (2) und eine Bedienungseingabevorrichtung (60) aufweist, wobei der Fahrzeugkörper (2) dazu konfiguriert ist, sich nach links zu neigen, während er nach links fährt, und sich nach rechts zu neigen, während er nach rechts fährt, wobei die Bedienungseingabevorrichtung (60) dazu konfiguriert ist, von einem Fahrer bedient zu werden;

eine Fahrzeug-Fahrzustands-Daten-Erzeugungseinrichtung (24), die dazu konfiguriert ist, Fahrzeug-Fahrzustands-Daten basierend auf den erfassten physikalischen Größendaten zu erzeugen; und

eine Fahrzeug-Fahrzustands-Daten-Ausgabe-Steuerung (25), die dazu konfiguriert ist, die Fahrzeug-Fahrzustands-Daten auszugeben, **dadurch gekennzeichnet, dass**

eine einzelne Kurve, die einen Verlangsamungsteil, einen Eintrittsteil, in dem das Neigungsfahrzeug einen Vorgang des Eintritts in die eine Kurve ausführt, einen Abbiegeteil, einen Anstiegsteil, in dem das Neigungsfahrzeug einen Vorgang des Anstiegs nach dem Abbiegen ausführt, und einen Beschleunigungsteil aufweist, und an der das Neigungsfahrzeug (1) abbiegt, während es sich neigt, um eine Gierbewegung kontinuierlich in einer identischen Richtung auszuführen, in eine Mehrzahl von Abschnitten unterteilt ist, die einen Abschnitt aufweist, der den Verlangsamungsteil aufweist, in dem das Neigungsfahrzeug (1) zu einem früheren Zeitpunkt als dem Eintrittsteil verlangsamt, die Fahrzeug-Fahrzustands-Daten-Erzeugungseinrichtung (24) dazu konfiguriert ist, Fahrzeug-Fahrzustands-Daten des Neigungsfahrzeugs (1) in jedem der Mehrzahl von Abschnitten der einzelnen eine Kurve basierend auf den erfassten physikalischen Größendaten zu erzeugen, wobei die physikalischen Größendaten von der Physikalische-Größendaten-Erfassungseinrichtung (21) erfasst werden und das Verhalten des Neigungsfahrzeugs (1) betreffen, während das Neigungsfahrzeug (1) an der eine Kurve nach links fährt, während es sich nach links neigt, oder an der eine Kurve nach rechts fährt, während es sich nach rechts neigt, wobei die Mehrzahl von Abschnitten den Abschnitt aufweist, der den Verlangsamungsteil aufweist, und die Fahrzeug-Fahrzustands-Daten-Ausgabe-Steuerung (25) dazu konfiguriert ist, die Fahrzeug-Fahrzustands-Daten in jedem der Abschnitte auszugeben.

2. Neigungsfahrzeug-Daten-Ausgabevorrichtung (20) gemäß Anspruch 1, bei der
die eine Kurve in die Mehrzahl von Abschnitten unterteilt ist, so dass der Eintrittsteil und der Anstiegsteil nicht in einem identischen Abschnitt enthalten sind.

3. Neigungsfahrzeug-Daten-Ausgabevorrichtung (20) gemäß Anspruch 2, bei der
die Mehrzahl von Abschnitten zumindest einen Abschnitt zwischen einem Eintrittsabschnitt, der den Eintrittsteil aufweist, und einem Anstiegsteil aufweist, der den Anstiegsabschnitt aufweist.

4. Neigungsfahrzeug-Daten-Ausgabevorrichtung (20) gemäß einem der Ansprüche 1 bis 3, die ferner folgende Merkmale aufweist:

eine Indizierte-Daten-Erzeugungseinrichtung (26), die dazu konfiguriert ist, indizierte Daten in jedem der Abschnitte der eine Kurve basierend auf den Fahrzeug-Fahrzustands-Daten des Neigungsfahrzeugs (1) in jedem der Abschnitte der eine Kurve zu erzeugen; und
eine Indizierte-Daten-Ausgabe-Steuerung (27), die dazu konfiguriert ist, die indizierten Daten auszugeben.

5. Neigungsfahrzeug-Daten-Ausgabevorrichtung (20) gemäß einem der Ansprüche 1 bis 4, bei der

die Fahrzeug-Fahrzustands-Daten-Erzeugungseinrichtung (24) dazu konfiguriert ist, die Fahrzeug-Fahrzustands-Daten basierend auf den erfassten physikalischen Größendaten in jedem der Abschnitte zu erzeugen und die Fahrzeug-Fahrzustands-Daten basierend auf den erfassten physikalischen Größendaten in einem gesamten Abschnitt der eine Kurve zu erzeugen, und
die Fahrzeug-Fahrzustands-Daten-Ausgabe-Steuerung (25) dazu konfiguriert ist, die Fahrzeug-Fahrzustands-Daten in jedem der Abschnitte auszugeben und die Fahrzeug-Fahrzustands-Daten in dem gesamten Abschnitt der eine Kurve auszugeben.

6. Neigungsfahrzeug-Daten-Ausgabevorrichtung (20) gemäß einem der Ansprüche 1 bis 5, bei der die Fahrzeug-Fahrzustands-Daten-Ausgab-Steuerung (25) dazu konfiguriert ist, die Fahrzeug-Fahrzustands-Daten in jedem der Abschnitte der eine Kurve in einem Format auszugeben, das einen Vergleich ermöglicht.

**Revendications**

1. Appareil de sortie de données de véhicule à inclinaison (20) comprenant:

un moyen d'acquisition de données de quantité physique (21) configuré pour acquérir les données de quantité physique relatives à un comportement d'un véhicule à inclinaison (1) lorsque le véhicule à inclinaison (1) vire à gauche dans un virage tout en s'inclinant vers la gauche ou vire à droite dans le virage tout en s'inclinant vers la droite, le véhicule à inclinaison (1) comportant une carrosserie de véhicule (2) et un dispositif d'entrée d'actionnement (60), la carrosserie de véhicule (2) étant configurée pour s'incliner vers la gauche tout en virant à gauche et pour s'incliner vers la droite tout en virant à droite, le dispositif d'entrée d'actionnement (60) étant configuré pour être actionné par un conducteur;
un générateur de données d'état de déplacement de véhicule (24) configuré pour générer les données d'état de déplacement de véhicule sur base des données de quantité physique acquises; et
un moyen de commande de sortie de données d'état de déplacement de véhicule (25) configuré pour sortir les données d'état de déplacement de véhicule, **caractérisé par le fait que**
un virage unique, qui comprend une partie de ralentissement, une partie d'entrée dans laquelle le véhicule à inclinaison effectue une opération d'entrée dans le virage, une partie de virage, une partie de montée dans laquelle le véhicule à inclinaison effectue une opération de montée après le virage, et une partie d'accélération, et sur lequel le véhicule à inclinaison (1) vire tout en s'inclinant pour effectuer un mouvement de lacet en continu dans une direction identique, est divisé en une pluralité de segments comportant un segment comportant la partie de ralentissement dans laquelle le véhicule à inclinaison (1) ralentit à un moment avant la partie d'entrée, le générateur de données d'état de déplacement de véhicule (24) est configuré pour générer les données d'état de déplacement du véhicule à inclinaison (1) dans chacun de la pluralité de segments du virage unique sur base des données de quantité physique acquises, les données de quantité physique étant acquises par le moyen d'acquisition de données de quantité physique (21) et étant relatives au comportement du véhicule à inclinaison (1) tandis que le véhicule à inclinaison (1) vire à gauche dans le virage tout en s'inclinant vers la gauche ou vire à droite dans le virage tout en s'inclinant vers la droite, la pluralité de segments comportant le segment comportant la partie de ralentissement, et
le moyen de commande de sortie de données d'état de déplacement de véhicule (25) est configuré pour sortir les données d'état de déplacement de véhicule dans chacun des segments.

2. Appareil de sortie de données de véhicule à inclinaison (20) selon la revendication 1, dans lequel le virage est divisé en la pluralité de segments de sorte que la partie d'entrée et la partie de montée ne soient pas incluses dans un segment identique.

3. Appareil de sortie de données de véhicule à inclinaison (20) selon la revendication 2, dans lequel la pluralité de segments comporte au moins un segment entre un segment d'entrée comportant la partie d'entrée et un segment de montée comportant la partie de montée.

4. Appareil de sortie de données de véhicule à inclinaison (20) selon l'une quelconque des revendications 1 à 3, comprenant par ailleurs:

   un générateur de données indexées (26) configuré pour générer les données indexées dans chacun des segments du virage sur base des données d'état de déplacement du véhicule à inclinaison (1) dans chacun des segments du virage; et
   un moyen de commande de sortie de données indexées (27) configuré pour sortir les données indexées.

5. Appareil de sortie de données de véhicule à inclinaison (20) selon l'une quelconque des revendications 1 à 4, dans lequel

   le générateur de données d'état de déplacement de véhicule (24) est configuré pour générer les données d'état de déplacement de véhicule sur base des données de quantité physique acquises dans chacun des segments, et pour générer les données d'état de déplacement de véhicule sur base des données de quantité physique acquises dans un segment entier du virage, et
   le moyen de commande de sortie de données d'état de déplacement de véhicule (25) est configuré pour sortir les données d'état de déplacement de véhicule dans chacun des segments, et sort les données d'état de déplacement de véhicule dans le segment entier du virage.

6. Appareil de sortie de données de véhicule à inclinaison (20) selon l'une quelconque des revendications 1 à 5, dans lequel le moyen de commande de sortie de données d'état de déplacement de véhicule (25) est configuré pour sortir les données d'état de déplacement de véhicule dans chacun des segments du virage dans un format permettant une comparaison entre eux.

FIG. 1

60

60a                         60b              60c

ACCELERATOR GRIP      BRAKE LEVER      BRAKE PEDAL

                                            60e
FOOT STEP            HANDLEBAR

60d              OPERATION INPUT DEVICE

20a

21

PHYSICAL-QUANTITY-DATA ACQUIRER

22

TURNING MOTION
DETERMINER

23

SECTION DIVIDER

24

VEHICLE-TRAVELING-STATE-DATA GENERATOR

25

VEHICLE-TRAVELING-STATE-DATA-OUTPUT CONTROLLER

TO DRIVING SKILL DETERMINER

FIG. 2

FIG. 3

FIG. 4

EP 4 035 981 B1

EP 4 035 981 B1

# FIG. 5

---- YAW RATE DETECTION VALUE ── YAW RATE (NOISE REMOVED)

WITH TIME (TIME [sec])

FIG. 6

——YAW RATE (NOISE REMOVED)
----LOW-FREQUENCY-BAND COMPONENT
·—·HIGH-FREQUENCY-BAND COMPONENT

FIG. 7

—— YAW RATE (LOW-FREQUENCY-BAND COMPONENT)
---- YAW ANGULAR ACCELERATION

WITH TIME (TIME [sec])

FIG. 8

— YAW RATE (NOISE REMOVED)
---- LOW-FREQUENCY-BAND COMPONENT
·—· HIGH-FREQUENCY-BAND COMPONENT

FIG. 9

HIGH

YAW DETERMINATION INDEX

SMOOTH MOTION: HIGH

SMOOTH MOTION: MIDDLE

SMOOTH MOTION: LOW

LOW

"ENTRY" SECTION | "TURNING" SECTION | "RISING" SECTION

START SECTION DIVIDING PROCESS

DETECT YAW RATE VALUE ─S01

S02
REMOVE YAW RATE NOISE

NO S03
DETERMINE TURNING MOTION

S04 YES
SEPARATE YAW RATE FREQUENCY CHARACTERISTIC

S05
CALCULATE YAW ANGULAR ACCELERATION

S06
DIVIDE CORNER SECTION

S07
SEND SECTION DIVISION DATA

S08 NO
LEAN VEHICLE STOPS?

YES
END

FIG. 10

START DRIVING-SKILL-DETERMINATION PROCESS

S11

GENERATE VEHICLE-TRAVELING-STATE DATA

S12

CALCULATE YAW DETERMINATION INDEX OF ENTRY SECTION

S13

CALCULATE YAW DETERMINATION INDEX OF TURNING SECTION

S14

CALCULATE YAW DETERMINATION INDEX OF RISING SECTION

S15

DRIVING-SKILL-DETERMINATION PROCESS OF EACH SECTION

S16

OUTPUT DRIVING-SKILL-DETERMINATION DATA

END

FIG. 11

60

OPERATION INPUT DEVICE

20a

21

PHYSICAL-QUANTITY-DATA ACQUIRER

22

TURNING MOTION DETERMINER

23

SECTION DIVIDER

24

VEHICLE-TRAVELING-STATE-DATA GENERATOR

25

VEHICLE-TRAVELING-STATE-DATA-OUTPUT CONTROLLER

FIG. 12

(a)

ENTRY
PORTION

RISING
PORTION

FIRST
TURNING

SECOND
TURNING

(b)

DECELERATION
PORTION

ACCELERATION
PORTION

ENTRY
PORTION

RISING
PORTION

TURNING
PORTION

ENTRY

RISING

TURNING

(c)

DECELERATION

ENTRY
PORTION

ACCELERATION

RISING
PORTION

FIRST
TURNING

SECOND
TURNING

(d)

DECELERATION

ENTRY
PORTION

ACCELERATION

RISING
PORTION

ENTRY

RISING

TURNING

(e)

DECELERATION

ENTRY
PORTION

ACCELERATION

RISING
PORTION

ENTRY

RISING

FIRST
TURNING

SECOND
TURNING

FIG. 13

FIG. 14

**EP 4 035 981 B1**

**REFERENCES CITED IN THE DESCRIPTION**

**Patent documents cited in the description**

- EP 3219567 A1
- DE 102005059216 A1
- EP 2517952 A1
- JP 6146865 B
- JP 2017187812 A